# EUROPEAN PATENT APPLICATION

(11) **EP 4 528 529 A1**
(43) Date of publication of application: **26.03.2025**
(21) Application number: 23862348.2
(22) Date of filing: 04.09.2023
(51) Int. Cl.: G06F 16/21

(54) **FILE PROCESSING METHOD AND ELECTRONIC DEVICE**

(30) Priority: 05.09.2022 CN 202211095247
(71) Applicant: Huawei Technologies Co., Ltd., Shenzhen, Guangdong 518129 (CN)
(72) Inventor: QIN, Hongwei, Shenzhen, Guangdong 518129 (CN); QIU, Jie, Shenzhen, Guangdong 518129 (CN); QIAN, Jing, Shenzhen, Guangdong 518129 (CN); JIANG, Junchao, Shenzhen, Guangdong 518129 (CN); WANG, Ke, Shenzhen, Guangdong 518129 (CN)
(74) Representative: Huawei European IPR
(86) International application number: PCT/CN2023/116818
(87) International publication number: WO 2024/051654

(57) **Abstract**

A file processing method and an electronic device are provided, relate to the field of terminal technologies, and can reduce storage space occupation. The method is applied to an electronic device, the electronic device stores an indication field of a first file, an initial value of the indication field is a first value, and the indication field is modified to a second value by the electronic device when the first file is modified. The method includes: attempting to modify a value of the indication field of the first file to a third value at a first moment, where the third value is different from the first value, and the third value is different from the second value; if the value of the indication field of the first file is successfully modified to the third value, obtaining a value of the indication field at a second moment; and determining, based on the value of the indication field of the first file at the second moment, whether the first file is modified in a time period from the first moment to the second moment.

## Description

This application claims priority to Chinese Patent Application No. 202211095247.7, filed with the China National Intellectual Property Administration on September 5, 2022 and entitled "FILE PROCESSING METHOD AND ELECTRONIC DEVICE", which is incorporated herein by reference in its entirety.

### TECHNICAL FIELD

This application relates to the field of terminal technologies, and in particular, to a file processing method and an electronic device.

### BACKGROUND

Currently, many electronic devices use file systems in operating systems to manage files. As a quantity of files stored in the electronic device increases sharply, a file management bottleneck occurs in the file system. In some scenarios, the files in the electronic device may occupy a large storage space. As a result, an available storage space of the electronic device is small.

### SUMMARY

This application provides a file processing method and an electronic device, to efficiently manage files.

To achieve the foregoing objective, embodiments of this application provide the following technical solutions.

According to a first aspect, a file processing method is provided, applied to an electronic device or a component (for example, a chip system) that supports a function of an electronic device, where the electronic device stores an indication field of a first file, an initial value of the indication field is a first value, and the indication field is modified to a second value by the electronic device when the first file is modified; and the method includes:
attempting to modify a value of the indication field of the first file to a third value at a first moment, where the third value is different from the first value, and the third value is different from the second value;
if the value of the indication field of the first file is successfully modified to the third value, obtaining a value of the indication field at a second moment; and
determining, based on the value of the indication field of the first file at the second moment, whether the first file is modified in a time period from the first moment to the second moment.

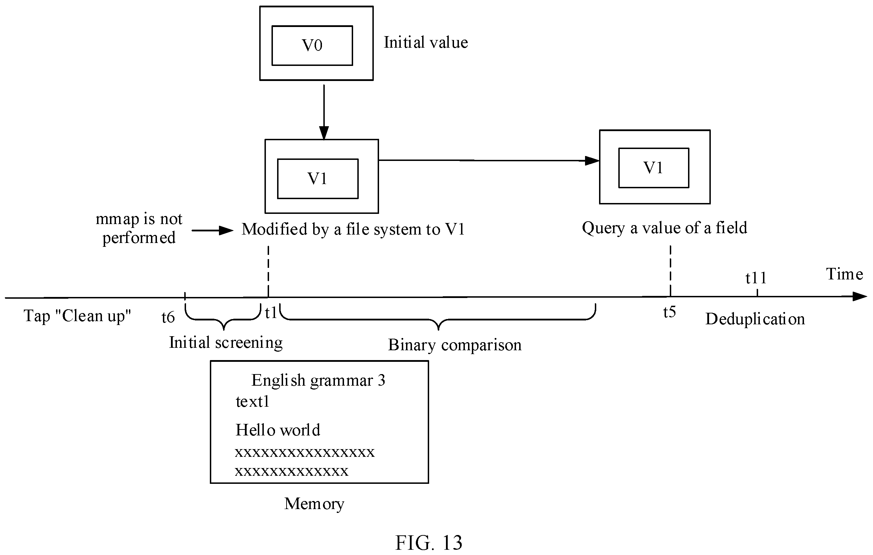

For example, as shown in FIG. 13, at a moment t1 (an example of the first moment), a mobile phone successfully modifies a value of a U field (an example of the indication field) of an English grammar 3 (an example of the first file) to V1 (an example of the third value), and queries a value of the U field at a moment t5 (an example of the second moment). The mobile phone may determine, based on the value of the U field of the English grammar 3 at the moment t5, whether the English grammar 3 is modified in a time period from t1 to t5.

In this embodiment of this application, a modification status of the first file may be determined by using the value of the indication field of the first file, so that the first file may be subsequently correspondingly managed based on the modification status of the first file. The electronic device does not need to continuously listen to the modification status of the first file in the period from the first moment to the second moment, but may stop listening at another moment other than the first moment and the second moment, to reduce resource consumption used by the electronic device for listening. For example, at the first moment, the electronic device may attempt to modify the value of the indication field of the first file to V1 through a first application, and after the first moment, the electronic device may exit the first application. At the second moment, the electronic device starts the first application again, obtains the value of the indication field of the first file, and determines, based on the value of the indication field, whether the first file is modified in the period from the first moment to the second moment. It can be learned that in this embodiment of this application, when the first application does not need to keep running, the electronic device may still determine whether the first file is modified in a time period, so that occupation of a storage space can be reduced.

In addition, this solution is irrelevant to system time. Therefore, even if a user modifies the system time, no incorrect determining is caused.

In a possible design, the attempting to modify a value of the indication field of the first file to a third value includes:
if a first condition is met, modifying the value of the indication field to the third value, where in the first condition, a file system of the electronic device is able to detect a modification operation that is performed on the first file in the time period from the first moment to the second moment.

In this way, once the file is modified in the period from the first moment to the second moment, the file system can ensure that the modification is sensed, and modify the value of the indication field of the file to a non-V1 value (for example, a second value V2). Subsequently, the electronic device can query the value of the indication field of the file. If the value of the indication field is modified to the non-V1 value, the electronic device determines that the file is modified in the period from the first moment to the second moment. On the contrary, if the value of the indication field is still V1, the electronic device determines that the file is not modified in the period from the first moment to the second moment.

In a possible design, after the first moment, the method further includes:
detecting that the first file is modified, and modifying the value of the indication field of the first file to the second value.

The determining, based on the value of the indication field of the first file at the second moment, whether the first file is modified in a time period from the first moment to the second moment includes:
if the value of the indication field of the first file at the second moment is the second value, determining that the first file is modified in the time period from the first moment to the second moment, or if the value of the indication field of the first file at the second moment is not the third value, determining that the first file is modified in the time period from the first moment to the second moment.

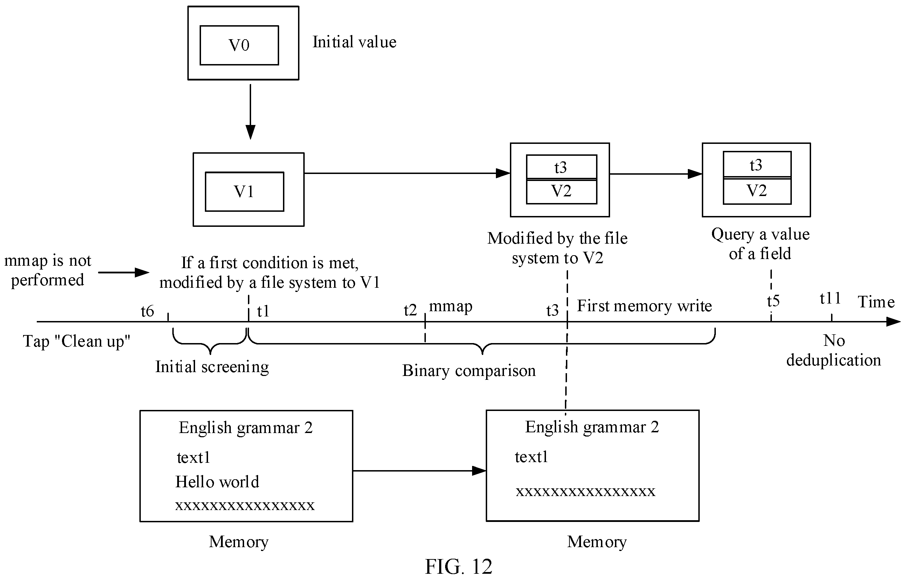

For example, as shown in FIG. 12, after the moment t1 (an example of the first moment), at a moment t3, it is detected that an English grammar 2 is modified (the modification is a first memory write after the moment t1), and the mobile phone modifies a value of a U field of the English grammar 2 to V2 (an example of the second value). At the moment t5 (an example of the second moment), the mobile phone queries a value of the U field of the English grammar 2, and learns that the value of the U field of the English grammar 2 at the moment t5 is V2 (no longer V1). In this case, it is determined that the English grammar 2 is modified in the time period from t1 to t5.

In a possible design, the determining, based on the value of the indication field of the first file at the second moment, whether the first file is modified in a time period from the first moment to the second moment includes:
if the value of the indication field of the first file at the second moment is the third value, determining that the first file is not modified in the time period from the first moment to the second moment, or if the value of the indication field of the first file at the second moment is not the second value, determining that the first file is not modified in the time period from the first moment to the second moment.

For example, as shown in FIG. 13, after a phone manager application scans for duplicate files (for example, performing binary comparison), and before a scanning result is displayed to the user, at the moment t5, the phone manager application queries a field value of the U field of the file, namely, the English grammar 3, and learns that the field value is V1 (an example of the third value). Because the field value of the U field of the English grammar 3 at the moment t5 is the same as the field value of the U field at the moment t1, and both are V1, the phone manager application may determine that the file, namely, the English grammar 3, is not modified in the period from the moment t1 to the moment t5.

In a possible design, the attempting to modify a value of the indication field of the first file to a third value includes: if a first condition is not met, skipping modifying the indication field to the third value.

The method further includes: when the value of the indication field of the first file fails to be modified to the third value, determining that the first file is modified in the time period from the first moment to the second moment.

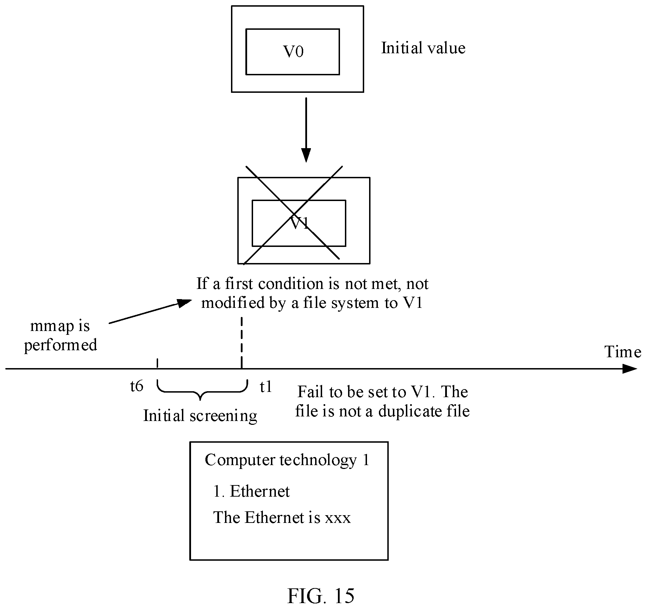

For example, as shown in FIG. 15, it is assumed that the mobile phone has performed a memory write operation on a computer technology 1 in candidate duplicate files before the moment t1. After initial screening of the duplicate files is completed, at the moment t1, because the first condition is not met, the phone manager application cannot successfully modify a value of a U field of the computer technology 1 to V1 (the value of the U field is still V0). In this case, the phone manager application considers the computer technology 1 as a modified file (no longer a duplicate file), and no longer performs deduplication on the computer technology 1, to avoid incorrect deduplication.

In a possible design, the first condition includes one or more of the following conditions: The first file is not mapped to a memory before the first moment; or the first file is mapped to a memory before the first moment, but the electronic device does not perform a write operation on the memory.

For a file, if the file is not mapped to the memory before the first moment, once the mobile phone subsequently performs one or more memory write operations on the file in the period from the first moment to the second moment, a first memory write operation definitely causes the mobile phone to execute related code of the file system. In other words, at least the first memory write operation in the period from the first moment to the second moment is detected by the file system. In this case, the file system may determine, based on at least the first memory write operation in the period from the first moment to the second moment, that the file is modified, and accordingly modify a value of a U field of the file to V2. Subsequently, an application may query the value of the U field of the file, and determine, based on the value of the U field, whether the file is modified in the period from the first moment to the second moment. It can be learned that in this embodiment of this application, the file system does not need to detect each memory write operation. Even if the file system misses detecting a memory write operation, the file system can still determine, based on at least a first memory write operation detected in a period of time, that the file is modified. In this way, detection accuracy of the electronic device can be improved.

Similarly, for a file, if the file is mapped to the memory before the first moment, but the electronic device does not perform a write operation on the memory, once the mobile phone subsequently performs one or more memory write operations on the file in the period from the first moment to the second moment, a first memory write operation definitely causes the mobile phone to execute related code of the file system. In other words, once the file is modified in the period from the first moment to the second moment, the modification is definitely sensed by the file system.

Based on this principle, if the file is mapped to the memory before the first moment, but the electronic device does not perform a write operation on the memory, the electronic device may modify the value of the U field of the file to V1 at the first moment. Subsequently, once the file is modified in the period from the first moment to the second moment, the value of the U field of the file is modified to a non-V1 value (for example, V2) by the file system. The electronic device may determine, based on the value of the U field of the file, whether the file is modified in the period from the first moment to the second moment.

It can be learned that, in this solution, incorrect determining in a mmap scenario can be reduced.

In a possible design, the method further includes:
obtaining duplicate files in the electronic device through scanning, where the duplicate files include the first file and a second file, the first file is stored in a first storage space, and the second file is stored in a second storage space;
determining that the first file and the second file are not modified in the time period from the first moment to the second moment; and
displaying a first interface, where the first interface includes information about the first file and information about the second file.

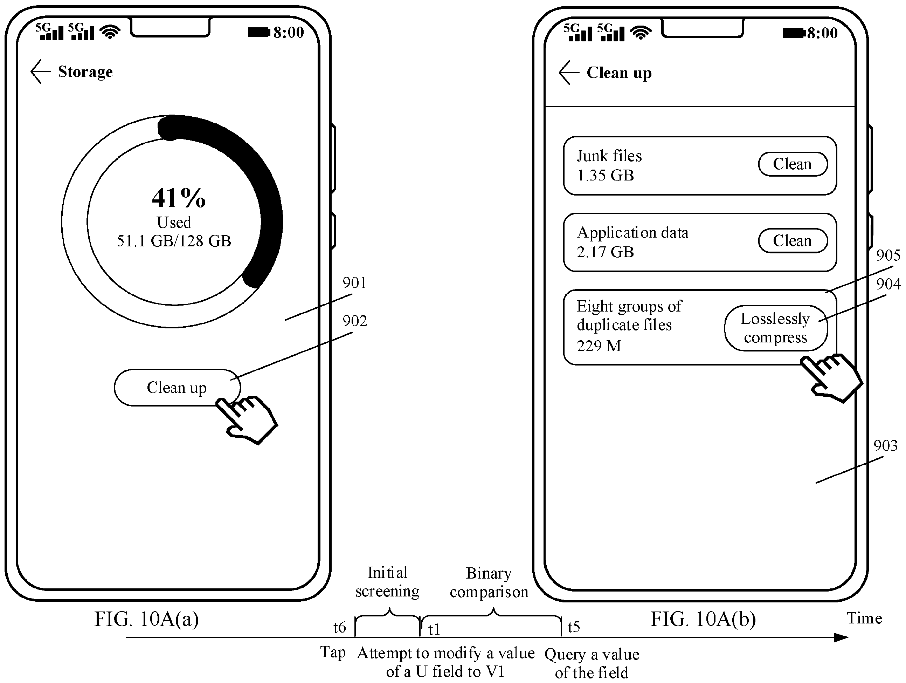

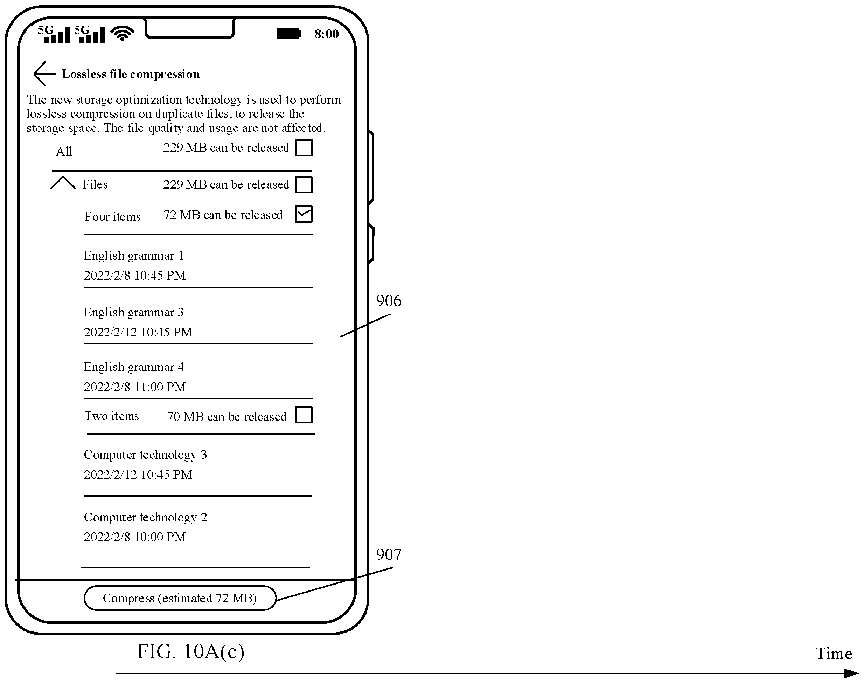

For example, English grammars 1 to 4 are obtained through scanning as a group of duplicate files, and the four duplicate files are respectively stored in storage spaces 1 to 4. If it is determined that the English grammar 2 is modified in the period from the first moment to the second moment, and the English grammars 1, 3, and 4 are not modified in the period from the first moment to the second moment, it means that the English grammars 1, 3, and 4 still constitute duplicate files. As shown in FIG. 10A(c), the mobile phone may display a first interface 906, and the first interface 906 includes information about the group of duplicate files including the English grammars 1, 3, and 4.

In a possible design, a first operation entered by the user on the first interface is detected, and the method further includes:
compressing the first file and the second file to a same storage space.

For example, as shown in FIG. 10A(c), an operation (an example of the first operation) of tapping a "Compress" button 907 by the user is detected, and the mobile phone performs compression on the group of duplicate files (the English grammars 1, 3, and 4) selected by the user, where compressed English grammars 1, 3, and 4 point to a same storage space. In this way, storage spaces can be released.

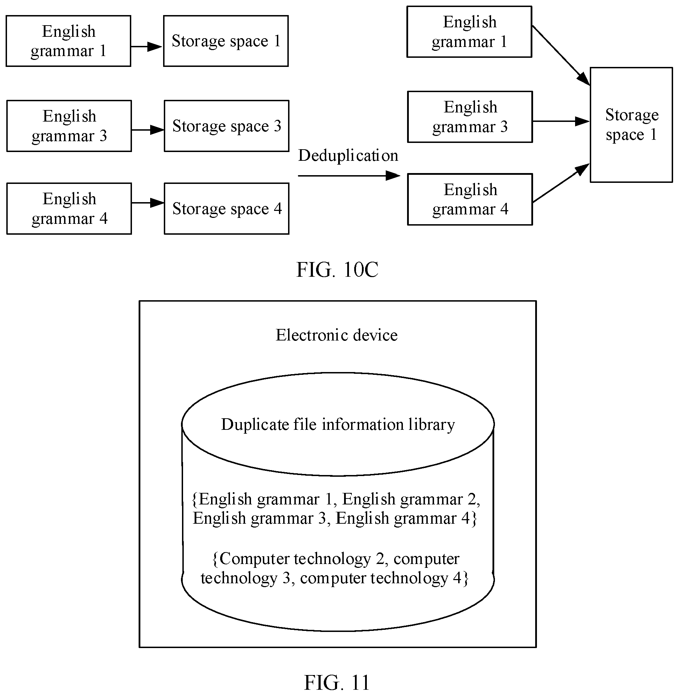

In a possible design, after the scanning for duplicate files in the electronic device, the method further includes:
storing an identifier of the first file and an identifier of the second file, where for example, in FIG. 11, the electronic device stores identifiers of the duplicate files in a duplicate file information library.

In a possible design, the identifier of the first file includes a first index node number of the first file, and the identifier of the second file includes a second index node number of the second file.

In this way, subsequently, when the user starts the phone manager and taps a "Clean up" button, the mobile phone may learn, based on the stored identifiers of the duplicate files, that the first file and the second file are historical duplicate files. The mobile phone may query values of U fields of the first file and the second file, to determine whether the first file and the second file still constitute duplicate files. The mobile phone does not need to re-scan content of the first file and the second file. This helps reduce running consumption of the mobile phone.

In a possible design, the determining, based on the value of the indication field of the first file at the second moment, whether the first file is modified in a time period from the first moment to the second moment includes:
if the value of the indication field of the first file at the second moment is the third value, and an index node number of the first file is the first index node number, determining that the first file is not modified in the time period from the first moment to the second moment.

According to a second aspect, a file processing method is provided, applied to an electronic device or a component (for example, a chip system) that supports a function of an electronic device, and the method includes:
displaying a second interface, where the second interface includes a plurality of duplicate files that are in the electronic device and that are obtained through scanning, and the plurality of duplicate files are respectively stored in a plurality of storage spaces of the electronic device;
in response to an operation entered by a user on the second interface, obtaining an indication field of each of the plurality of duplicate files at a third moment, where a value of the indication field of the duplicate file indicates whether the duplicate file is modified; and
compressing a part of the plurality of duplicate files to a same storage space based on the values of the indication fields of the plurality of duplicate files at the third moment.

For example, as shown in FIG. 10A(c), a mobile phone displays an interface 906 (an example of the second interface), and the interface 906 includes a plurality of duplicate files obtained through scanning (a group of duplicate files including English grammars 1, 3, and 4, and a group of duplicate files including computers 2 and 3).

In response to tapping a "Compress" button 907 on the interface 906 by a user, the mobile phone obtains, at the third moment, indication fields of the group of duplicate files including the English grammars 1, 3, and 4 selected by the user, and compresses a part of files in the English grammars 1, 3, and 4 to a same storage space based on values of the respective indication fields of the English grammars 1, 3, and 4 at the third moment.

In this solution, indication fields of the duplicate files on the second interface can be obtained based on a user operation, and a part of the duplicate files can be compressed based on the indication fields of the duplicate files. In this way, a storage space of the electronic device can be released. In addition, not all duplicate files selected by the user are compressed. Instead, whether the duplicate files selected by the user really need to be compressed is checked based on values of indication fields of the duplicate files selected by the user, to reduce a probability of incorrect compression, so as to prevent incorrect compression from affecting normal running of the electronic device. It can be learned that, in this solution, accurate file compression can be implemented, and the storage space of the electronic device can be accurately released. In addition, a problem of incorrect deduplication that is caused because before deduplication is performed, another process modifies a duplicate file and a deduplication program does not sense that the duplicate file is modified can be effectively avoided.

In a possible design, an initial value of the indication field of each duplicate file is a first value.

In a possible design, before the displaying a second interface, the method further includes:
obtaining a plurality of candidate duplicate files through scanning, where the plurality of candidate duplicate files include the plurality of duplicate files;
attempting to modify a value of an indication field of each of the plurality of candidate duplicate files to the third value at a first moment; and
comparing the plurality of candidate duplicate files to determine the plurality of duplicate files from the plurality of candidate duplicate files.

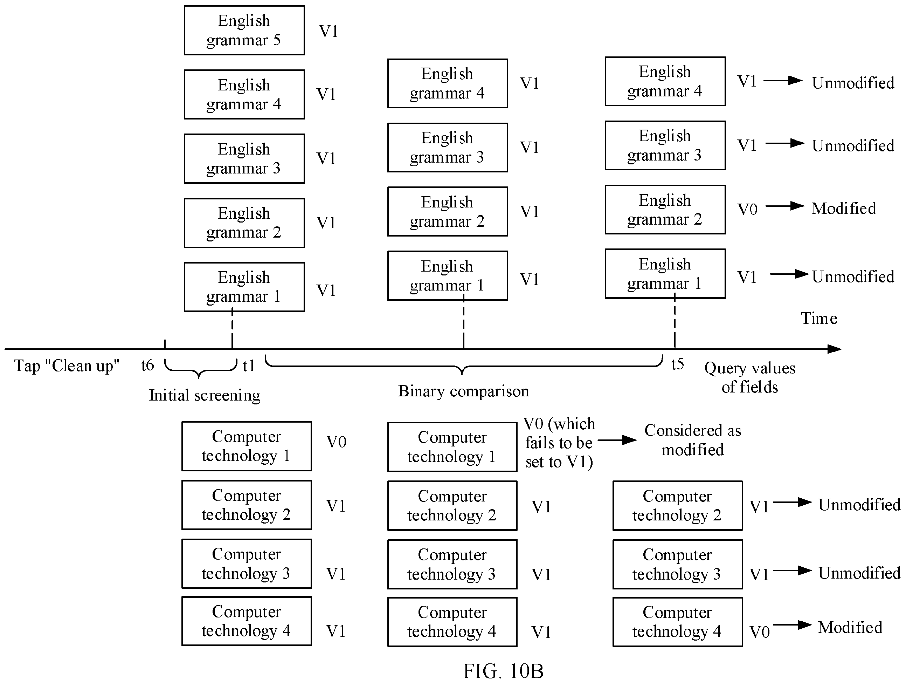

For example, as shown in FIG. 10B, after the user taps a "Clean up" button, the mobile phone obtains a plurality of candidate duplicate files through initial screening. English grammars 1 to 5 constitute a group of candidate duplicate files, and computer technologies 1 to 4 constitute a group of candidate duplicate files. At a moment t1 (an example of the first moment), the mobile phone attempts to modify a value of an indication field of each of the plurality of candidate duplicate files to V1 (an example of the third value).

In a possible design, the obtaining a plurality of candidate duplicate files through scanning includes:
displaying a third interface, where the third interface includes a first control; and
detecting an operation of the user on the first control, and obtaining the plurality of candidate duplicate files through scanning.

For example, as shown in FIG. 10A(a), the mobile phone displays an interface 901 (an example of the third interface), and the interface 901 includes a "Clean up" button 902 (the first control). It is detected that the user taps the "Clean up" button 902, and the mobile phone obtains a plurality of candidate duplicate files (for example, the English grammars 1 to 5 shown in FIG. 10B) through scanning, and obtains a plurality of duplicate files (for example, the English grammars 1 to 4 shown in FIG. 10B) based on the plurality of candidate duplicate files.

In a possible design, the obtaining a plurality of candidate duplicate files through scanning includes:
when the electronic device is idle, obtaining the plurality of candidate duplicate files through scanning. For example, the electronic device performs scanning at night, or performs scanning after lock screen duration reaches specific duration.

Pre-scanning is performed when the mobile phone is idle, so that time required for subsequent file deduplication can be reduced, file deduplication efficiency can be improved, and human-machine interaction efficiency between the user and the electronic device can be improved.

In a possible design, after the first moment, the method further includes:
obtaining a value of an indication field of at least one duplicate file at a second moment, or obtaining a value of an indication field of at least one duplicate file and an index node number of the at least one duplicate file at a second moment; and
displaying the second interface when a third condition is met, where the third condition includes: the value of the indication field of the at least one duplicate file at the second moment is the third value, and the index node number of the at least one duplicate file is consistent with an index node number stored in a database.

For example, as shown in FIG. 10B, at a moment t5 (an example of the second moment), the mobile phone queries values of U fields (indication fields) of the English grammars 1 to 4. A value of a U field of the English grammar 2 is V0 (not V1), and values of U fields of the English grammars 1, 3, and 4 are all V1. In this case, the mobile phone may determine that the English grammars 1, 3, and 4 are not modified in a time period from t1 to t5. The mobile phone may display information about the English grammars 1, 3, and 4 on the interface 906 (the second interface) shown in FIG. 10A(c).

In a possible design, the attempting to modify a value of an indication field of each of the plurality of candidate duplicate files to the third value at a first moment includes:
if at least one of the plurality of candidate duplicate files meets a first condition, modifying a value of an indication field of the at least one candidate duplicate file to the third value, where in the first condition, a file system of the electronic device is able to detect a modification operation that is performed on the at least one candidate duplicate file in a time period from the first moment to the second moment.

In a possible design, the obtaining a value of an indication field of at least one duplicate file at a second moment includes: at the second moment, learning that a value of an indication field of a target duplicate file in the at least one duplicate file is the third value.

The method further includes: determining that the target duplicate file is not modified in the time period from the first moment to the second moment when the value of the indication field of the target duplicate file at the second moment is the third value.

In a possible design, the plurality of candidate duplicate files include a third file.

After the first moment, the method further includes: detecting that the third file is modified, and modifying a value of an indication field of the third file to a second value;
at the second moment, learning that a value of the indication field of the third file is not the third value; and
determining that the third file is modified in the time period from the first moment to the second moment.

In a possible design, the plurality of candidate duplicate files include a fourth file.

The attempting to modify a value of an indication field of each of the plurality of candidate duplicate files to the third value at a first moment includes: if the fourth file does not meet a first condition, skipping modifying an indication field of the fourth file to the third value.

The method further includes: when a value of the indication field of the fourth file fails to be modified to the third value, determining that the fourth file is modified in a time period from the first moment to a second moment.

In a possible design, the compressing a part of the plurality of duplicate files to a same storage space based on the values of the indication fields of the plurality of duplicate files at the third moment includes:
if a value of an indication field of a first file in the plurality of duplicate files at the third moment is a third value, compressing the first file; or
if a value of an indication field of a first file in the plurality of duplicate files at the third moment is not a third value, skipping compressing the first file.

For example, if the value of the indication field of the first file in the plurality of duplicate files at the third moment is the third value, the first file is compressed.

Alternatively, if the value of the indication field of the first file in the plurality of duplicate files at the third moment is not the third value, the first file is not compressed.

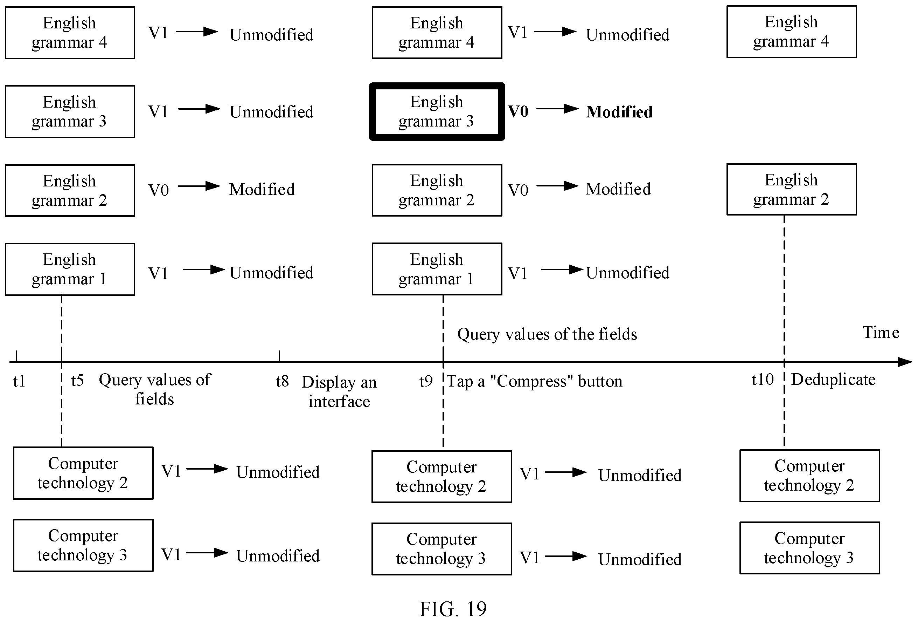

For example, as shown in FIG. 19, after the user taps a "compress" button, and before the mobile phone performs deduplication, at a moment t9 (the third moment), a phone manager application queries values of U fields of duplicate files (the English grammars 1, 3, and 4, and computer technologies 1 and 2) again. It is determined that a value of a U field of the English grammar 3 is successfully set to V1 at the moment t1, but a value of the U field at the moment t9 is V0. In this case, the phone manager application may determine that the English grammar 3 is modified in a time period from the moment t1 to the moment t9. Similarly, the phone manager application determines whether another duplicate file is modified from the moment t1 to the moment t9.

As shown in FIG. 19, because the English grammar 3 is modified in the time period from t1 to t9, the English grammar 3 and the English grammars 1 and 4 no longer constitute duplicate files, and the phone manager application does not perform deduplication on the English grammar 3. On the contrary, the English grammars 1 and 4 are not modified in the time period from t1 to t9. Therefore, the English grammars 1 and 4 still constitute duplicate files, and the phone manager application may perform deduplication on the English grammars 1 and 4 at a moment t10.

In this way, whether a file is a duplicate file is checked before actual deduplication and compression, so that a probability of incorrect deduplication can be reduced, and deduplication accuracy can be improved.

In a possible design, the method further includes:
storing information about the plurality of duplicate files in the database, where the information about the duplicate files includes any one or more of the following information: index node numbers of the duplicate files, paths of the duplicate files, and names of the duplicate files.

In a possible design, the determining that the target duplicate file is not modified in the time period from the first moment to the second moment when the value of the indication field of the target duplicate file at the second moment is the third value includes:
when the value of the indication field of the target duplicate file is the third value, if an index node number of the target duplicate file does not change, determining that the target duplicate file is not modified in the time period from the first moment to the second moment.

According to a third aspect, a file processing apparatus is provided, used in an electronic device or a chip system. For example, the file processing apparatus is used in an electronic device, the electronic device stores an indication field of a first file, an initial value of the indication field is a first value, and the indication field is modified to a second value by the electronic device when the first file is modified; and the apparatus includes:
a processing module, configured to:
attempt to modify a value of the indication field of the first file to a third value at a first moment, where the third value is different from the first value, and the third value is different from the second value;
if the value of the indication field of the first file is successfully modified to the third value, obtain a value of the indication field at a second moment; and
determine, based on the value of the indication field of the first file at the second moment, whether the first file is modified in a time period from the first moment to the second moment.

In a possible design, the attempting to modify a value of the indication field of the first file to a third value includes:
if a first condition is met, modifying the value of the indication field to the third value, where in the first condition, a file system of the electronic device is able to detect a modification operation that is performed on the first file in the time period from the first moment to the second moment.

In a possible design, the processing module is further configured to: after the first moment, detect that the first file is modified, and modify the value of the indication field of the first file to the second value.

The determining, based on the value of the indication field of the first file at the second moment, whether the first file is modified in a time period from the first moment to the second moment includes:
if the value of the indication field of the first file at the second moment is the second value, determining that the first file is modified in the time period from the first moment to the second moment.

In a possible design, the determining, based on the value of the indication field of the first file at the second moment, whether the first file is modified in a time period from the first moment to the second moment includes:
if the value of the indication field of the first file at the second moment is a third value, determining that the first file is not modified in the time period from the first moment to the second moment.

In a possible design, the attempting to modify a value of the indication field of the first file to a third value includes: if a first condition is not met, skipping modifying the indication field to the third value.

The processing module is further configured to: when the value of the indication field of the first file fails to be modified to the third value, determine that the first file is modified in the time period from the first moment to the second moment.

In a possible design, the first condition includes one or more of the following conditions: The first file is not mapped to a memory before the first moment; or the first file is mapped to a memory before the first moment, but the electronic device does not perform a write operation on the memory.

In a possible design, the processing module is further configured to:
obtain duplicate files in the electronic device through scanning, where the duplicate files include the first file and a second file, the first file is stored in a first storage space, and the second file is stored in a second storage space; and
determine that the first file and the second file are not modified in the time period from the first moment to the second moment.

The apparatus further includes a display module, and the display module is configured to display a first interface, where the first interface includes information about the first file and information about the second file.

In a possible design, the apparatus further includes an input module, and the input module is configured to detect a first operation entered by the user on the first interface.

The processing module is configured to compress the first file and the second file to a same storage space based on the first operation detected by the input module.

In a possible design, the apparatus further includes a storage module. The storage module is configured to store an identifier of the first file and an identifier of the second file after scanning for the duplicate files in the electronic device.

In a possible design, the identifier of the first file includes a first index node number of the first file, and the identifier of the second file includes a second index node number of the second file.

In a possible design, the determining, based on the value of the indication field of the first file at the second moment, whether the first file is modified in a time period from the first moment to the second moment includes:
if the value of the indication field of the first file at the second moment is the third value, and an index node number of the first file is the first index node number, determining that the first file is not modified in the time period from the first moment to the second moment.

According to a fourth aspect, a file processing apparatus is provided, used in an electronic device or a chip system, where the apparatus includes:
a display module, configured to display a second interface, where the second interface includes a plurality of duplicate files that are in the electronic device and that are obtained through scanning, and the plurality of duplicate files are respectively stored in a plurality of storage spaces of the electronic device; and
a processing module, configured to: in response to an operation entered by a user on the second interface, obtain an indication field of each of the plurality of duplicate files at a third moment, where a value of the indication field of the duplicate file indicates whether the duplicate file is modified.

The processing module is further configured to compress a part of the plurality of duplicate files to a same storage space based on the values of the indication fields of the plurality of duplicate files at the third moment.

In a possible design, an initial value of the indication field of each duplicate file is a first value.

In a possible design, the processing module is further configured to: before displaying the second interface, obtain a plurality of candidate duplicate files through scanning, where the plurality of candidate duplicate files include the plurality of duplicate files.

The processing module is further configured to attempt to modify a value of an indication field of each of the plurality of candidate duplicate files to the third value at a first moment.

In a possible design, the obtaining a plurality of candidate duplicate files through scanning includes:
controlling the display module to display a third interface, where the third interface includes the first control; and
detecting an operation of the user on the first control, and obtaining the plurality of candidate duplicate files through scanning.

In a possible design, the obtaining a plurality of candidate duplicate files through scanning includes:
when the electronic device is idle, obtaining the plurality of candidate duplicate files through scanning.

In a possible design, the processing module is further configured to obtain a value of an indication field of at least one duplicate file at a second moment after the first moment.

The display module is further configured to display the second interface based on the value of the indication field of the at least one duplicate file at the second moment, where the plurality of duplicate files on the second interface are files that are in an unmodified state in a time period from the first moment to the second moment.

In a possible design, the attempting to modify a value of an indication field of each of the plurality of candidate duplicate files to the third value at a first moment includes:
if at least one of the plurality of candidate duplicate files meets a first condition, modifying a value of an indication field of the at least one candidate duplicate file to the third value, where in the first condition, a file system of the electronic device is able to detect a modification operation that is performed on the at least one candidate duplicate file in a time period from the first moment to the second moment.

In a possible design, the obtaining a value of an indication field of at least one duplicate file at a second moment includes: at the second moment, learning that a value of an indication field of a target duplicate file in the at least one duplicate file is the third value.

The processing module is further configured to determine that the target duplicate file is not modified in the time period from the first moment to the second moment when the value of the indication field of the target duplicate file at the second moment is the third value.

In a possible design, the plurality of candidate duplicate files include a third file.

The processing module is further configured to:
after the first moment, detect that the third file is modified, and modify a value of an indication field of the third file to a second value;
at the second moment, learn that a value of the indication field of the third file is not the third value; and
determine that the third file is modified in the time period from the first moment to the second moment.

In a possible design, the plurality of candidate duplicate files include a fourth file.

The attempting to modify a value of an indication field of each of the plurality of candidate duplicate files to the third value at a first moment includes: if the fourth file does not meet a first condition, skipping modifying an indication field of the fourth file to the third value.

The processing module is further configured to: when a value of the indication field of the fourth file fails to be modified to the third value, determine that the fourth file is modified in a time period from the first moment to the second moment.

In a possible design, the compressing a part of the plurality of duplicate files to a same storage space based on the values of the indication fields of the plurality of duplicate files at the third moment includes:
if a value of an indication field of a first file in the plurality of duplicate files at the third moment is a third value, compressing the first file; or
if a value of an indication field of a first file in the plurality of duplicate files at the third moment is not a third value, skipping compressing the first file.

In a possible design, the storage module is configured to store identifiers of the plurality of duplicate files, where the identifiers of the duplicate files include index node numbers of the duplicate files.

In a possible design, the determining that the target duplicate file is not modified in the time period from the first moment to the second moment when the value of the indication field of the target duplicate file at the second moment is the third value includes:
when the value of the indication field of the target duplicate file is the third value, if an index node number of the target duplicate file does not change, determining that the target duplicate file is not modified in the time period from the first moment to the second moment.

In any possible design of any one of the foregoing aspects, the indication field is stored in a metadata area of the electronic device.

In any possible design of any one of the foregoing aspects, the identifier of the first file includes a first index node number of the first file, and the identifier of the second file includes a second index node number of the second file.

In any possible design of any one of the foregoing aspects, the first condition includes one or more of the following conditions: The duplicate file is not mapped to a memory before the first moment; or the duplicate file is mapped to a memory before the first moment, but the electronic device does not perform a write operation on the memory.

### BRIEF DESCRIPTION OF DRAWINGS

FIG. 1A is an example diagram of a duplicate file scanning procedure according to an embodiment of this application;
FIG. 1B is an example diagram of an i-mtime field according to an embodiment of this application;
FIG. 2 is a diagram of a write operation in a write interface manner according to an embodiment of this application;
FIG. 3 is a diagram of a write operation in a memory write manner according to an embodiment of this application;
FIG. 4 and FIG. 5 are other diagrams of a write operation according to an embodiment of this application;
FIG. 6 is a diagram of a hardware structure of an electronic device according to an embodiment of this application;
FIG. 7 is a diagram of a software structure of an electronic device according to an embodiment of this application;
FIG. 8 is a diagram of a data area and a metadata area according to an embodiment of this application;
FIG. 9 is a diagram of a file processing method according to an embodiment of this application;
FIG. 10A(a) to FIG. 10A(c) are a diagram of an interface according to an embodiment of this application;
FIG. 10B and FIG. 10C are diagrams of scenarios according to an embodiment of this application;
FIG. 11 is a diagram of a database according to an embodiment of this application;
FIG. 12 is a diagram of a scenario in which a file is modified according to an embodiment of this application;
FIG. 13 is a diagram of a scenario in which a file is not modified according to an embodiment of this application;
FIG. 14 is a diagram of an interface according to an embodiment of this application;
FIG. 15 is a diagram of a scenario in which V1 setting fails according to an embodiment of this application;
FIG. 16 is a diagram of a scenario in which a file is modified according to an embodiment of this application;
FIG. 17 is a diagram of a scenario in which a file is not modified according to an embodiment of this application;
FIG. 18 is a diagram of a scenario in which V1 setting fails according to an embodiment of this application;
FIG. 19 is a diagram of a scenario according to an embodiment of this application;
FIG. 20 is a diagram of an interface according to an embodiment of this application; and
FIG. 21 and FIG. 22 are diagrams of structures of apparatuses according to an embodiment of this application.

### DESCRIPTION OF EMBODIMENTS

Terms "including", "having", and any other variant thereof mentioned in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that in embodiments of this application, words such as "example" or "for example" are used to represent giving an example, an illustration, or a description. Any embodiment or design solution described as an "example" or "for example" in embodiments of this application should not be explained as being more preferred or having more advantages than another embodiment or design solution. Exactly, use of the words such as "example" or "for example" is intended to present a related concept in a specific manner.

In the descriptions of this application, unless otherwise specified, "a plurality of" means two or more than two. "And/or" in this specification describes only an association relationship between associated objects and indicates that there may be three relationships. For example, A and/or B may represent the following three cases: Only A exists, both A and B exist, and only B exists.

For ease of understanding, the following first describes related terms and concepts that may be used in embodiments of this application.

### 1. File deduplication

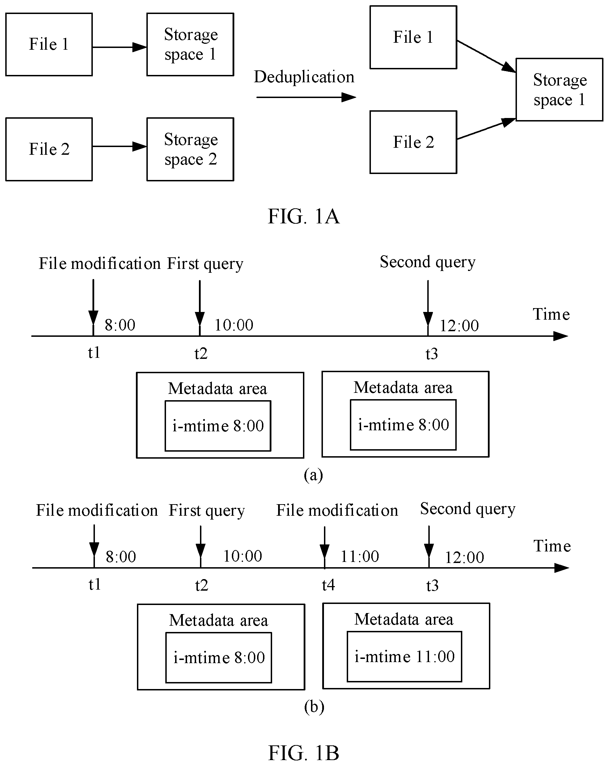

In some scenarios, there are a plurality of duplicate files in a file system. The plurality of duplicate files originally occupy a plurality of storage spaces. After deduplication, the plurality of duplicate files occupy only one storage space. The duplicate files are files with completely same content. For example, as shown in FIG. 1A, a file 1 and a file 2 constitute duplicate files. Before deduplication, the file 1 and the file 2 respectively occupy a storage space 1 and a storage space 2. After an electronic device performs deduplication on the file 1 and the file 2, the file 1 and the file point to the same storage space 1. This greatly releases a storage space of the electronic device. In some solutions, the electronic device may scan for stored duplicate files. Scanning of the duplicate files may include initial screening and binary comparison. During initial screening, the electronic device selects a part of content in a file, and obtains a value by reading the part of content. If values of selected content of two files are the same, the electronic device initially considers that the two files may be duplicate files. Then, the electronic device performs binary comparison on the two files, and compares all content of the two files byte by byte. When a binary comparison result is that the content is consistent, it indicates that the two files are duplicate files.

In some other scenarios, the binary comparison may be alternatively replaced with another step used to determine duplicate files, for example, hash value comparison. A specific implementation of a duplicate file scanning procedure is not limited in embodiments of this application.

### 2. i-mtime field

Based on whether a file is modified in a period of time, a modification status of the file may be classified into two types: One is that the file is modified in the period of time, and the other is that the file is not modified in the period of time.

In some solutions, an electronic device may set an i-mtime field, and the i-mtime field may indicate time at which the file is last modified. Optionally, the i-mtime field may be usually stored in a metadata area of a file system. Specifically, the i-mtime field may be stored in an index node (inode) area of the metadata area. For example, a file 1 has been modified three times in history, and modification time is 2022-8-22 (8:00), 2022-8-23 (10:00), and 2022-8-23 (18:00) respectively. In this case, as shown in Table 1, a field value of an i-mtime field of the file 1 may be 2022-8-23 (18:00). Similarly, a file 2 has been modified twice in history, and modification time is 2022-8-22 (18:00) and 2022-8-23 (10:00) respectively. In this case, as shown in Table 1, a field value of an i-mtime field of the file 2 may be 2022-8-23 (10:00).

**Table 1**

| i-mtime | File |
|---|---|
| 2022-8-23 (18:00) | File 1 |
| 2022-8-23 (10:00) | File 2 |

In some solutions, an application in the electronic device may learn, by querying an i-mtime field of a file, whether the file is modified in a period of time. In a possible implementation, the application separately queries the i-mtime field of the file at a time point 1 and a time point 2. If field values of the i-mtime field in the two queries are consistent, it indicates that the file is not modified in a period from the time point 1 to the time point 2. On the contrary, if field values of the i-mtime field in the two queries are inconsistent, it indicates that the file is modified in a period from the time point 1 to the time point 2.

For example, as shown in (a) in FIG. 1B, the application queries the i-mtime field of the file 1 at 10:00, and learns that time at which the file 1 is last modified is 8:00. The application queries the i-mtime field of the file 1 again at 12:00, and learns that time at which the file 1 is last modified is 8:00. In this case, field values (indicating the time at which the file is last modified) obtained in the two queries are the same, and the application may determine that the file 1 is not modified during 10:00 to 12:00.

For another example, as shown in (b) in FIG. 1B, the application queries the i-mtime field of the file 1 at 10:00, and learns that time at which the file 1 is last modified is 8:00. The application queries the i-mtime field of the file 1 again at 12:00, and learns that time at which the file 1 is last modified is 11:00. In this case, field values obtained in the two queries are different, and the application may determine that file 1 is modified during 10:00 to 12:00.

### 3. Write (write) interface

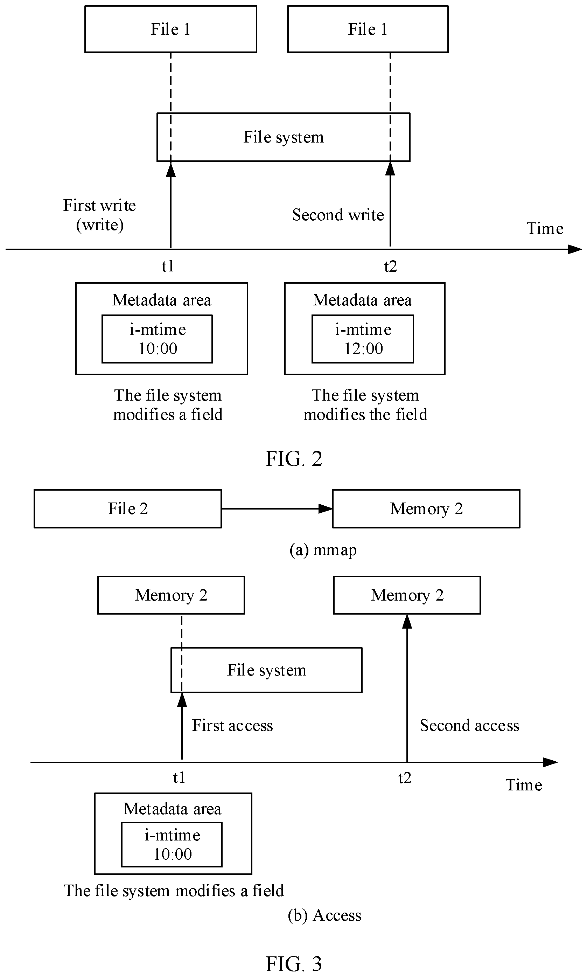

In a file write manner, an electronic device may perform a file write operation through a write (write) interface. In this file write manner, a segment of code in a file system is executed for each write operation, and the file system may modify an i-mtime field of a file, to record time at which the file is last modified. For example, as shown in FIG. 2, when the write interface is invoked to modify a file 1 at a moment t1 (10:00), the electronic device executes the code in the file system, and the file system may modify an i-mtime field of the file 1, to identify that time at which the file 1 is last modified is 10:00. Similarly, when the write interface is invoked to modify the file 1 at a moment t2 (12:00), the electronic device executes the code in the file system, and the file system may modify the i-mtime field of the file 1, to identify that time at which the file 1 is last modified is 12:00.

### 4. mmap

In another file write manner, an electronic device may map a file to a specific memory through a mmap interface. Subsequently, during a file write, a write operation may be performed on the file in a memory write manner. A memory write may be understood as writing content into the memory to which the file is mapped, which is equivalent to indirectly writing the content into the corresponding file. In this file write manner, after a file is mapped to a corresponding memory, when the electronic device performs a write on the memory for a first time, the electronic device executes related code in a file system. In some examples, it is possible that the code in the file system is no longer executed when a write is subsequently performed on the same memory, to avoid extra overheads caused by trapping into the file system.

For example, as shown in (a) in FIG. 3, the electronic device maps a file 2 to a memory 2. As shown in (b) in FIG. 3, at a moment t1 (10:00), the electronic device performs a write operation on the memory 2 for a first time through the mmap interface. In this case, the electronic device executes the related code in the file system to perform the write operation on the memory 2. Therefore, the file system can sense that the file 2 associated with the memory 2 is modified, and accordingly modify an i-mtime field of the file 2, to identify that time at which the file 2 is last modified is 10:00.

Then, still as shown in (b) in FIG. 3, at a moment t2, the electronic device performs a write operation on the memory 2 through the mmap interface. Because the write operation has been performed on the memory 2 in history, to avoid system overheads caused by frequent trapping into the file system, at the moment t2, the electronic device no longer traps into the file system to perform the write operation on the memory 2.

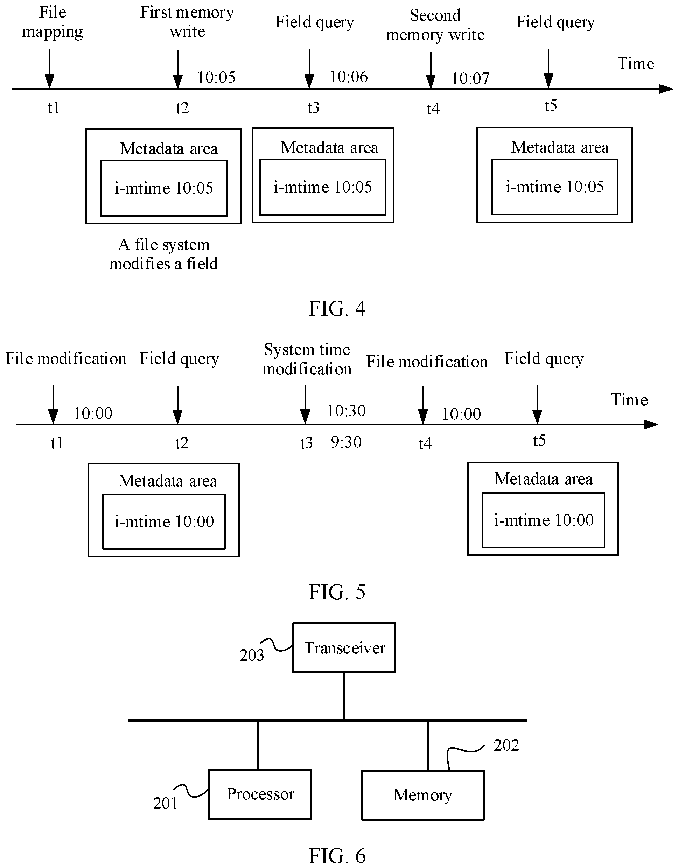

For another example, as shown in FIG. 4, at a moment t1, the electronic device maps a file to a memory. Then, at a moment t2 (10:05), the electronic device writes content into the memory, which is equivalent to writing the corresponding content into the file mapped to the memory. Because this write is a first write to the memory, the related code in the file system is executed, and the file system may sense that the file is modified, and modify an i-mtime field of the file, to identify that time at which the file is last modified is 10:05. Then, at a moment t3 (10:06), an application in the electronic device queries the i-mtime field of the file. At a moment t4 (10:07), the electronic device writes content into the same memory for a second time, and to avoid frequent trapping into the file system, the electronic device does not trap into the code in the file system in this memory write. Therefore, the file system cannot sense that the file associated with the memory is modified, and correspondingly, the i-mtime field of the file is not modified. At a moment t5, the application queries the i-mtime field of the file again. Because field values of the i-mtime field queried at the moment t5 and the moment t3 are both 10:05, the electronic device mistakenly considers that the file is not modified in a time period from t3 to t5 (namely, a period from 10:05 to 10:07).

It can be learned that in some scenarios, when a write operation is performed in a mmap manner, the electronic device does not trap into the file system. As a result, the file system cannot sense that a file is modified, cannot track a modification of the file, and cannot update a field value of an i-mtime field in time. Consequently, the electronic device incorrectly determines whether the file is modified.

### 5. Incorrect determining of a modification status of a file due to a system time modification

In some scenarios, regardless of whether a write operation is performed through a write interface or a mmap interface, when system time is modified, a modification status of a file may be incorrectly determined. For example, as shown in FIG. 5, at a moment t1 (10:00), the file is modified. Then, at a moment t2, an application in an electronic device queries an i-mtime field of the file, and learns that time at which the file is last modified is 10:00. At a moment t3, the system time of the electronic device is modified, for example, from 10:30 to 9:30. Then, at a moment t4 (being 10:00 after the system time is modified), the file is modified again. At a moment t5, the application queries the i-mtime field of the file again. Because field values of the i-mtime field queried at the moment t5 and the moment t3 are both 10:00, the electronic device mistakenly considers that the file is not modified in a time period from t3 to t5 (namely, a period from 10:05 to 12:00).

Herein, the system time may be modified by a user, or may be automatically modified by a system.

It can be learned that, because the system time is modified, system time in the two file modifications may be the same, and the electronic device incorrectly determines whether the file is modified. This cannot meet a service requirement of accurately determining, by the electronic device, whether the file is modified. In other words, the modification status of the file cannot be reliably determined, and performance of the electronic device is low.

### 6. inotify

In some solutions, an inotify mechanism may also be used to listen to whether a file is modified. An application may notify, through an inotify interface, a file system that a modification status of the file needs to be listened to. Subsequently, the file system detects an event that the file is modified, and notifies the application that the file is modified. In this manner, the application needs to keep running in a time period in which listening needs to be performed. A large quantity of system resources (for example, a memory resource) are occupied, and overheads of an electronic device are large.

It can be learned that the foregoing solutions for determining whether a file is modified cannot cause the electronic device to obtain good performance. To resolve the foregoing technical problem, embodiments of this application provide a file processing method. The method is applicable to an electronic device. For example, the electronic device in embodiments of this application may be implemented by an electronic device in FIG. 6. FIG. 6 is a diagram of a hardware structure of an electronic device according to an embodiment of this application. An electronic device 200 includes at least one processor 201, a memory 202, and at least one transceiver 203.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions of this application.

The foregoing components may include a communication line, configured to transmit information between the foregoing components.

The transceiver 203 is configured to communicate with another device. In embodiments of this application, the transceiver may be a module, a circuit, a bus, an interface, or another apparatus that can implement a communication function, and is configured to communicate with the another device. Optionally, the transceiver may be a transmitter that is independently disposed, and the transmitter may be configured to send information to the another device; or the transceiver may be a receiver that is independently disposed, and is configured to receive information from the another device. Alternatively, the transceiver may be a component that integrates functions of sending and receiving information. A specific implementation of the transceiver is not limited in embodiments of this application.

The memory 202 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium that can be used to carry or store expected program code in a form of an instruction or a data structure and that can be accessed by a computer. However, this is not limited thereto. The memory may independently exist and may be connected to the processor through a communication line. The memory may alternatively be integrated with the processor.

The memory 202 is configured to store computer-executable instructions for implementing the solutions of this application, and the processor 201 controls the execution. The processor 201 is configured to execute the computer-executable instructions stored in the memory 202, to implement methods provided in the following embodiments of this application.

Optionally, the computer-executable instructions in embodiments of this application may also be referred to as application program code, instructions, a computer program, or another name. This is not specifically limited in embodiments of this application.

In a specific implementation, in an embodiment, the processor 201 may include one or more CPUs.

In a specific implementation, in an embodiment, the electronic device 200 may include a plurality of processors. Each of the processors may be a single-core (single-CPU) processor, or may be a multi-core (multi-CPU) processor. The processor herein may refer to one or more devices, circuits, and/or processing cores configured to process data (for example, computer program instructions).

FIG. 6 is an example diagram of the structure of the electronic device. It should be understood that the electronic device shown in the figure is merely an example, and during actual application, the electronic device may have more or fewer components than those shown in FIG. 6, or two or more components may be combined, or there may be a different component configuration.

A software system of the electronic device may use a layered architecture, an event-driven architecture, a microkernel architecture, a micro service architecture, or a cloud architecture. For example, the software system of the electronic device may be an Android^{®} system. In embodiments of the present invention, an Android system with a layered architecture is used as an example to illustrate the software structure of the electronic device.

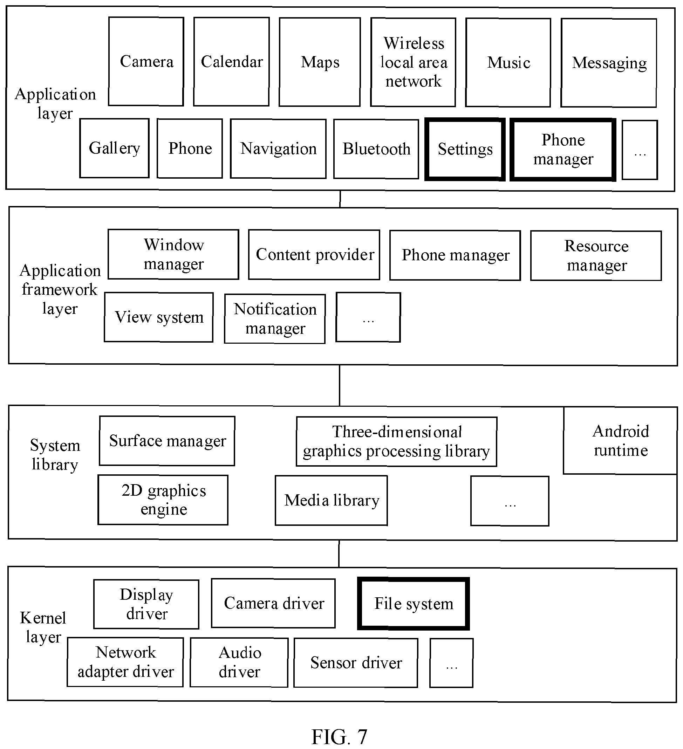

FIG. 7 is a block diagram of the software structure of the electronic device according to an embodiment of the present invention.

In the layered architecture, software is divided into several layers, and each layer has a clear role and task. The layers communicate with each other through a software interface. In some embodiments, the Android system is divided into five layers: an application program layer (application layer for short), an application framework layer (framework layer for short), an Android runtime (Android runtime) and system library, a hardware abstraction layer (Hardware Abstraction Layer, HAL), and a kernel layer from top to bottom.

### (1) Application layer

The application layer may include a series of application packages. As shown in FIG. 7, the application packages may include applications such as Camera, Gallery, Calendar, Phone, Maps, Navigation, a wireless local area network (wireless local area network, WLAN), Bluetooth, Music, Video, and Messaging.

In embodiments of this application, the applications may further include applications such as a setting application and a phone manager application. The phone manager application is used as an example. The phone manager application may invoke an interface provided by a file system to modify a field value of a U field of a corresponding file. Subsequently, the phone manager application may determine, based on the field value of the U field, whether the corresponding file is modified in a period of time.

Optionally, an application may determine a value of a U field in at least one of the following manners.

In a first manner, the application may invoke a first interface provided by the file system, and the first interface returns a value of a U field of a file.

In a second manner, the application invokes a second interface provided by the file system, and the file system determines a value of a U field of a file in an execution process, and determines, based on the value of the U field, whether to continue to perform remaining steps of the second interface.

Optionally, the application may be an application running in a user mode.

The application running in the "user mode" may be referred to as a "user-mode program". For example, applications such as MeeTime and AI life are all user-mode programs. In some cases, the user-mode program needs to use some functions (for example, reading file content) provided by an operating system. In this case, the user-mode program may invoke an application programming interface (application programming interface, API) provided by the operating system, and traps into a kernel mode from the user mode to execute a function provided by a kernel of the operating system.

### (2) Framework layer

The framework layer provides an API and a programming framework for an application at the application layer. The framework layer includes some predefined functions.

As shown in FIG. 7, the framework layer may include an activity manager, a window manager, a content provider, a view system, a phone manager, a resource manager, a notification manager, and the like.

The activity manager is configured to be responsible for starting all APP processes, starting four APP components (for example, an activity (activity), a service (service), a broadcast receiver (broadcast receiver), and a content provider (content provider)), switching between APPs and between internal interfaces of the APPs, and life cycles of various components. The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like. The view system includes visual controls such as a control for displaying a text and a control for displaying an image. The view system may be configured to construct an application. A display interface may include one or more views. For example, a display interface including a notification icon of Messaging may include a text display view and a picture display view. The phone manager is configured to provide a communication function of the electronic device, for example, management of a call status (including answering, declining, or the like). The resource manager provides various resources such as a localized character string, an icon, an image, a layout file, and a video file for an application. The notification manager enables an application to display notification information in the status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application running on a background or a notification that appears on a screen in a form of a dialog window. For example, text information is displayed in the status bar, an announcement is given, the electronic device vibrates, or the indicator light blinks.

### (3) Android runtime and system library

As shown in FIG. 7, the Android runtime is responsible for scheduling and management of the Android system.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem, and provide fusion of 2D and 3D layers for a plurality of applications. The media library supports playback and recording in a plurality of commonly used audio and video formats, and static image files. The media library may support a plurality of audio and video encoding formats, for example, MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

### (4) Kernel layer

The kernel layer is a layer between hardware and software.

In embodiments of this application, the kernel layer may include the file system. The file system is a core module of the kernel of the operating system, that is, one of main components. The file system is responsible for managing and storing file information, mainly for creating a file for a user, storing, reading, modifying, and dumping the file, controlling file access, canceling the file when the user no longer uses the file, and the like.

In some embodiments, the file system may run in the kernel mode.

The application running in the "user mode" may be referred to as a "user-mode program". For example, applications such as MeeTime and AI life are all user-mode programs. In some cases, the user-mode program needs to use some functions (for example, reading file content) provided by an operating system. In this case, the user-mode program may invoke an application programming interface (application programming interface, API) provided by the operating system, and traps into a kernel mode from the user mode to execute a function provided by a kernel of the operating system.

Data in the file system may include metadata and data. The metadata is used to describe a feature and an attribute of a file. Optionally, the metadata includes but is not limited to the following information: control information of the file system, a data structure, and description information of the file, for example, a file length and a file type. The file type is, for example, a regular file (regular inode), a directory file (directory inode), a soft link (symbol link inode), or a special file (special inode).

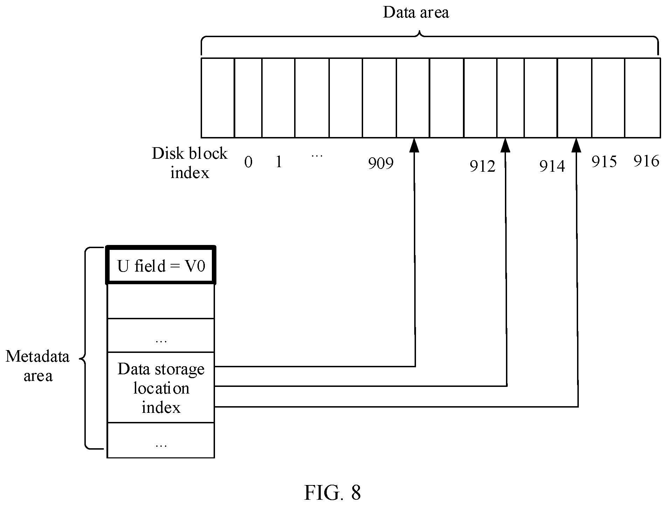

Optionally, the metadata and the data of the file may be stored in a storage device (for example, a hard disk). As shown in FIG. 8, a storage area of the storage device may include a metadata area and a data area.

The data of the file may be stored in the data area of the storage device. Optionally, data stored in the data area may be data obtained by performing file-level compression processing based on a lossless compression technology. The data in the data area is stored in a physical storage space of a storage medium (for example, a disk or a flash memory) based on a set of disk blocks. Data of a same file may be stored in consecutive disk blocks, or may be stored in inconsecutive disk blocks in a cross manner.

It should be understood that introducing a concept of a disk block in this application does not mean that the storage medium is limited to a disk, and the disk block may be used to represent a small physical storage space obtained after the physical storage space of the storage medium is divided.

As shown in FIG. 8, a data storage location may be represented by an index of a block (block) in which data is located. For example, in FIG. 8, a file is stored in blocks 909, 912, and 914. The metadata area may store indexes of the blocks 909, 912, and 914 of the file. Subsequently, when performing operations such as a read/write operation on the file, the electronic device may read, from the metadata area, the indexes of the blocks in which the file is located, and access (for example, read) the file at locations of the corresponding blocks based on the indexes.

In some embodiments, the file system may provide an interface for the user-mode program to read and write a file. In a first possible implementation, the file system provides a read/write interface (for example, read and write), and the user-mode program invokes the read/write interface to perform read/write processing on the file.

In a second possible implementation, the file system provides a memory mapping interface (for example, mmap), and the user-mode program invokes the memory mapping interface to map the file to a memory, and obtains a mapped memory address. Then, the user-mode program may access the file in a memory access manner, for example, perform a write operation on the file in a memory write manner.

In some embodiments, for the first file access method, because each file access operation invokes the interface provided by the file system, the file system may sense each file access operation.

For the second file access method, for first file access (for example, a first memory write) after the mapping is established, a memory page fault occurs. In this case, the function of the file system is invoked. Therefore, the file system knows that the user-mode program accesses the file. However, subsequent access (for example, a subsequent memory write) may not necessarily cause a memory page fault. Therefore, the file system may not sense that the user-mode program modifies the file.

In embodiments of this application, as shown in FIG. 8, the file system may add an unmodified field (which may be referred to as a U field for short) to the metadata area, and the U field may indicate whether a corresponding file is modified. Each file has a corresponding U field.

Optionally, the file system may set an initial value of the U field. For example, the initial value is set to V0.

The file system may provide an interface for an application, and the application may invoke the interface to modify a field value of the U field (for example, modify the field value to V1). Subsequently, the application may determine, based on the value of the U field, whether the corresponding file is modified.

The following describes in detail the technical solutions in embodiments of this application by using an example in which the electronic device is a mobile phone. The following first provides descriptions by using a file deduplication scenario as an example.

### Embodiment 1

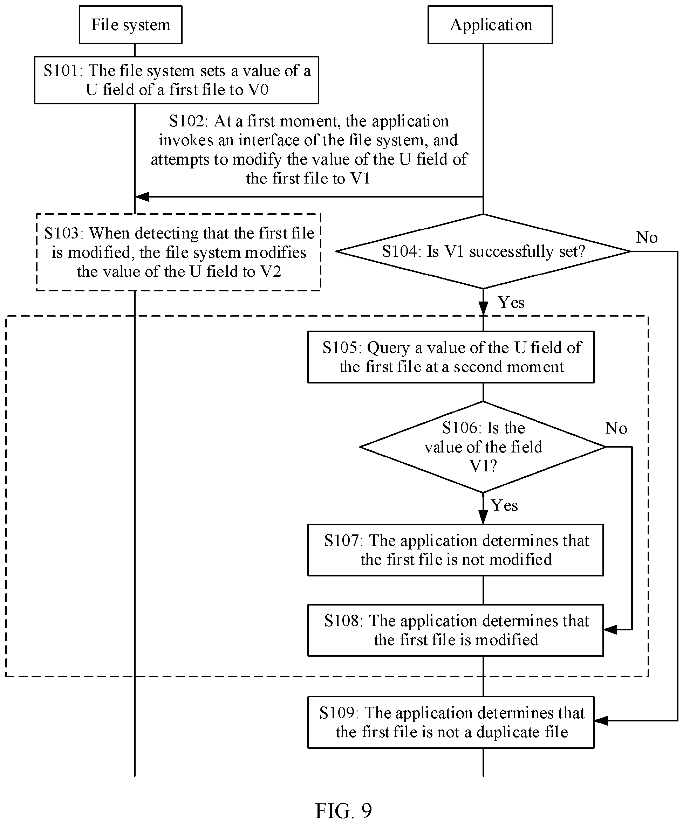

As shown in FIG. 9, a technical solution in this embodiment of this application may include the following steps.

S101: A file system sets a value of a U field of a first file to V0.

Optionally, the U field may be stored in a metadata area of the file system.

S102: At a first moment, an application invokes an interface of the file system, and attempts to modify the value of the U field of the first file to V1.

For example, as shown in FIG. 10A(a), the mobile phone displays an interface 901 of a phone manager application, and the interface 901 may include a "Clean up" button 902. After it is detected that a user taps the "Clean up" button 902, the mobile phone may scan to-be-cleaned data stored in the mobile phone. The to-be-cleaned data may include a plurality of duplicate files, namely, a plurality of files whose content is completely the same.

In some embodiments, in a process in which the phone manager application scans for the plurality of duplicate files, the phone manager application invokes the interface of the file system, to attempt to modify a field value of a U field corresponding to each of the plurality of duplicate files from an initial value V0 to V1. Optionally, a process of scanning for duplicate files may include initial screening and binary comparison. After obtaining, through initial screening, files that are initially identified as duplicate files (which may be referred to as candidate duplicate files for short), the phone manager application may invoke the interface of the file system before binary comparison, to attempt to modify a value of a U field of each candidate duplicate file to V1.

For example, as shown in FIG. 12, at a moment t6, after the user taps the "Clean up" button, the mobile phone may perform initial screening of the duplicate files. After the initial screening is completed, the mobile phone initially identifies that English grammars 1 to 4 are a group of candidate duplicate files and computer technologies 1 and 2 are a group of candidate duplicate files. For example, a value of a U field of the English grammar 2 in the candidate duplicate files is attempted to be modified to V1. The user taps the "Clean up" button. After the mobile phone performs initial screening of the duplicate files, at a moment t1 (the first moment), the phone manager application invokes the interface of the file system, to attempt to modify the value of the U field corresponding to the English grammar 2 from V0 to V1. In the example in FIG. 12, because the mobile phone has not performed mmap for the English grammar 2 before the moment t1, a first condition is met, and the phone manager application may successfully modify the value of the U field of the English grammar 2 from V0 to V1.

Similarly, the phone manager application may attempt to modify a value of a U field of another candidate duplicate file (namely, a file that is initially identified as a duplicate file) to V1.

In a possible implementation, when the application wants to set the U field of the first file to V1, the application may invoke the interface of the file system to send a request message to the file system, where the request message is used to request to modify the initial value of the U field of the first file to V1.

Optionally, V1 may be specified by the application, or may be specified by the file system.

In some embodiments, after receiving the request message from the application, the file system determines whether a first condition for modifying the value of the U field of the file is met. When the first condition is met, the file system may modify the value of the U field of the first file to V1. On the contrary, when the first condition is not met, the file system does not modify the value of the U field of the first file to V1.

Optionally, the first condition includes: whether the file has been mapped to a memory (for example, the application has mapped the file by using mmap()).

For example, as shown in FIG. 15, because the mobile phone has mapped the file, namely, the computer technology 1, to the memory before the moment t1, the first condition is not met. In this case, at the moment t1, the phone manager application cannot successfully modify a field value of a U field of the computer technology 1 from V0 to V1.

FIG. 10B shows a part of the candidate duplicate files obtained through initial screening. After the initial screening, the phone manager application initially identifies that English grammars 1 to 5 are a group of candidate duplicate files and computer technologies 1 to 4 are a group of candidate duplicate files. At the moment t1, the phone manager application may invoke the interface of the file system, to attempt to modify a value of a U field of each candidate duplicate file to V1. For example, Table 2 shows a field value of a U field of each candidate duplicate file after the moment t1.

**Table 2**

| File | U field |
|---|---|
| English grammar 1 | V1 |
| English grammar 2 | V1 |
| English grammar 3 | V1 |
| English grammar 4 | V1 |
| English grammar 5 | V1 |
| Computer technology 1 | V0 |
| Computer technology 2 | V1 |
| Computer technology 3 | V1 |
| ... | ... |

As shown in Table 2, the field value of the U field of the computer technology 1 is still the initial value V0. A possible reason is that the mobile phone has mapped the file, namely, the computer technology 1, to the memory before the moment t1. Field values of U fields of other files, such as the English grammars 1 to 4 and the computer technology 2, are modified to V1 by the phone manager application, indicating that the mobile phone does not map these files to the memory before the moment t1.

Optionally, when the first condition is met, the file system returns a setting success return message to the application, and the application may determine, based on the message, that the value of the U field of the file is modified to V1.

Optionally, when the first condition is not met, the file system returns a setting failure return message to the application, and the application may determine, based on the message, that the value of the U field of the file is not set to V1 (still V0).

S103: When detecting that the first file is modified, the file system modifies the value of the U field of the first file to V2.

In some scenarios, the user may modify the file. For example, as shown in FIG. 12, it is assumed that before the moment t1, the mobile phone has not performed a memory write operation on the English grammar 2. At a moment t3, in response to a modification intention of the user on the English grammar 2, the mobile phone performs a first memory write on the English grammar 2. Specifically, when the mobile phone performs the first memory write operation on the English grammar 2, related code in the file system is definitely executed. In this way, at the moment t3, the file system can sense that the English grammar 2 is modified, and modify the U field of the English grammar 2 from V1 to V2.

Optionally, the file system may further store modification time of the file in the metadata area. As shown in FIG. 12, the file system may store t3 in the metadata area. Subsequently, the application may determine the modification time of the file based on the modification time stored in the metadata area.

S104: The application determines whether the value of the U field of the first file is successfully set to V1; and if the value of the U field of the first file is set to V1, performs steps S106 to S110; or if the value of the U field of the first file is not set to V1, performs step S111.

Optionally, the application may receive a return message from the file system, where the return message indicates whether the value of the U field of the first file is successfully set to V1.

It should be understood that, that the application successfully sets a value of a U field of a duplicate file to V1 means that the mobile phone does not map the file to the memory before the moment t1. In this case, the mobile phone may subsequently map the file to the memory. In addition, if the file is modified in a memory write manner, the mobile phone definitely executes the related code in the file system when a first memory write is performed on the file. In this way, the file system can sense that the file is modified, and modify a value of a U field of the file (for example, from V1 to V2). The mobile phone may determine, based on the value (V2) of the U field of the file, that the file is modified. On the contrary, if the mobile phone does not modify the file subsequently, the value of the U field of the file is still V1. The mobile phone may determine, based on the value (V1) of the U field of the file, that the file is not modified.

Values of V2 and V1 are different. In some implementations, V2 may be equal to V0.

Alternatively, if the file is subsequently modified in a write interface manner, the mobile phone also executes the related code of the file system each time a write operation is performed, and the file system can still sense that the file is modified, and modify the value (V2) of the U field of the file. On the contrary, if the mobile phone does not modify the file subsequently, the value of the U field of the file is still V1. The mobile phone may determine, based on the value (V1) of the U field of the file, that the file is not modified.

In short, when the application can successfully set the value of the U field of the file to V1 at the first moment, regardless of whether the file is subsequently modified in the memory write manner or the write interface manner, the mobile phone may accurately determine, based on whether the value of the U field of the file changes subsequently (for example, at a second moment), whether the file is actually modified.

On the contrary, that the application fails to set a value of a U field of a file to V1 (still V0) means that the mobile phone has previously mapped the file to the memory. In this case, if the file is subsequently modified in the memory write manner (not necessarily a first memory write), to reduce overheads, the mobile phone may not execute the related code in the file system, and the file system cannot track a modification event of the file, and therefore cannot update the value of the U field of the file when the file is modified. For example, when the file is modified, the file system may not sense that the file is modified, and therefore does not update the value of the U field of the file. For another example, when the file is not modified, the file system does not update the value of the U field of the file. In this way, regardless of whether the file is modified, the value of the U field of the file is V0 (not updated to V2 by the file system), and the mobile phone cannot determine, based on the value of the U field, whether the file is modified.

It is considered that when the application fails to set a value of a U field of a file to V1 at the first moment, the file system may not sense that the file is modified, and the file system may not update the value of the U field of the file in time. As a result, the mobile phone cannot subsequently determine, at the second moment based on the value of the U field, whether the file is modified. In this case, to avoid incorrect data deduplication, the mobile phone may perform subsequent step S109, to determine that the first file is not a duplicate file, so as to avoid incorrect deduplication of the first file.

In some embodiments, when the application lacks corresponding permission, the value of the U field of the file may still fail to be modified from V0 to V1. In embodiments of this application, a system application authorized by the user has permission to modify the U field, to reduce a risk of incorrect determining.

Alternatively, in some embodiments, when a storage space is insufficient, the application may fail to modify the value of the U field of the file to V1.

S105: The application queries the value of the U field of the first file at the second moment.

In some embodiments, if values of U fields of some candidate duplicate files (files that are initially identified as duplicate files) are successfully modified to V1 at the first moment, the mobile phone may perform binary comparison on these candidate duplicate files, to determine final duplicate files.

For example, as shown in FIG. 10B, at a moment t6, the user taps the "Clean up" button, to trigger the mobile phone to perform initial screening of the candidate duplicate files. The candidate duplicate files obtained through initial screening include the group of candidate duplicate files including the English grammars 1 to 5 and the group of candidate duplicate files including the computer technologies 1 to 4. At the moment t1, the phone manager application attempts to set the value of the U field of each candidate duplicate file to V1. It is assumed that at the moment t1, values of U fields of the English grammars 1 to 4 and the computer technologies 2 to 4 are all successfully set to V1. In this case, the phone manager application may perform binary comparison on a group of candidate duplicate files including the application grammars 1 to 4 and a group of candidate duplicate files including the computer technologies 2 to 4, to determine final duplicate files. After the binary comparison, the English grammars 1 to 4 constitute a group of duplicate files, and the computer technologies 2 to 4 constitute a group of duplicate files.

In some embodiments, the mobile phone may store information about a duplicate file in a duplicate file information library. Optionally, the duplicate file information library may store an identifier of the duplicate file. As shown in FIG. 11, the duplicate file information library may include an identifier of each duplicate file in the group of duplicate files including the English grammars 1 to 4, and an identifier of each duplicate file in the group of duplicate files including the computer technologies 2 to 4. Optionally, the identifier of the duplicate file includes but is not limited to: a name of the duplicate file, an index node number (inode number) of the duplicate file, and whether a value of a U field of the duplicate file is successfully set to V1 at the first moment. An index node number of a file uniquely identifies the file. Files with different content have different index node numbers.

In some embodiments, after the duplicate files are obtained through scanning, and before a scanning result of the duplicate files is presented to the user, the application may query values of U fields of the duplicate files at the second moment, and determine, based on the values of the U fields of the duplicate files at the second moment, whether the duplicate files are modified in a period from the first moment to the second moment.

In a possible implementation, the application queries the value of the U field of the file. Alternatively, the application sends a query request to the file system, and the file system queries the value of the U field of the file, and returns the value of the U field of the file to the application.

For example, a modification status of the English grammar 2 in the duplicate files is determined. As shown in FIG. 12, after the initial screening is completed, at the moment t1, the value of the U field of the English grammar 2 that is initially identified as a duplicate file (a candidate duplicate file) is successfully set to V1. Then, the phone manager performs binary comparison on each candidate duplicate file, and finally determines that the English grammars 1 to 4 constitute a group of duplicate files and the computer technologies 2 to 4 constitute a group of duplicate files. After the duplicate files are obtained through scanning, and before the scanning result of the duplicate files is displayed to the user, at a moment t5, the phone manager application may query a value of the U field of the English grammar 2, and determine, based on the value of the U field at the moment t5, whether the English grammar 2 is modified in a time period from t1 to t5.

S106: The application determines whether the value of the U field of the first file is V1; and if the value of the U field is V1, performs S107, or if the value of the U field is not V1, performs step S108.

S107: The application determines that the first file is not modified.

For example, as shown in FIG. 13, after the phone manager application scans for the duplicate files (performing binary comparison), and before the scanning result is displayed to the user, at the moment t5, the phone manager application queries a field value of a U field of the duplicate file, namely, the English grammar 3, and learns that the field value is V1. Because the field value of the U field of the English grammar 3 at the moment t5 is the same as a field value at the moment t1, and both are V1, the phone manager application may determine that the file, namely, the English grammar 3, is not modified in the period from the moment t1 (at the moment t1, the phone manager application invokes the interface of the file system to attempt to modify the field value of the U field of the English grammar 3 from V0 to V1) to the moment t5.

Similarly, the phone manager application may query field values of U fields of the English grammars 1, 3, and 4. If the values of the U fields of the English grammars 1, 3, and 4 are all V1, it indicates that the file system fails to detect that the English grammars 1, 3, and 4 are modified. In this case, the phone manager application may determine that the three files, namely, the English grammars 1, 3, and 4, are not modified in the period from the moment t1 to the moment t5. Therefore, the English grammars 1, 3, and 4 still constitute duplicate files. The phone manager application may perform deduplication on the group of duplicate files, to reduce occupation of the storage space.

In some embodiments, the application determines an index node number of the first file and the value that is of the U field of the first file at the second moment. If the index node number of the first file remains unchanged, and the value of the U field of the first file at the second moment is V1, it is determined that the first file is not modified in the time period from the first moment to the second moment.

S108: The application determines that the first file is modified.

For example, as shown in FIG. 12, after the phone manager application performs binary comparison to obtain the scanning result of the duplicate files, and before the scanning result is displayed to the user, at the moment t5, the phone manager application may read the field value of the U field of the English grammar 2 from the metadata area, and learns that the field value is V2. Because the field value of the U field of the English grammar 2 at the moment t5 is different from the field value at the moment t1, the phone manager application may determine that the file, namely, the English grammar 2, may be modified in the period from the moment t1 (at the moment t1, the phone manager application requests the file system to modify the field value of the U field of the English grammar 3 from V0 to V1) to the moment t5. The mobile phone no longer considers the English grammar 2 as a duplicate file. In this way, subsequently, the phone manager application does not perform deduplication on the English grammar 2.

Optionally, the metadata area may further store modification time t3 of the English grammar 2, and the phone manager application may read the modification time from the metadata area, and accordingly learn that the modification time of the English grammar 2 is t3.

In comparison with the solution shown in FIG. 4 in which because the file system misses detecting a second memory write operation and the like, and the i-mtime field cannot be updated in time, the electronic device mistakenly considers that the file is not modified in the time period from t3 to t5, according to the technical solution in this embodiment of this application, for a file, if the file is not mapped to the memory before the first moment, once the mobile phone subsequently performs one or more memory write operations on the file in the period from the first moment to the second moment, a first memory write operation definitely causes the mobile phone to execute the related code of the file system. In other words, at least the first memory write operation in the period from the first moment to the second moment is detected by the file system. In this way, the file system may determine, based on at least the first memory write operation in the period from the first moment to the second moment, that the file is modified. It can be learned that in this embodiment of this application, the file system does not need to detect each memory write operation. Even if the file system misses detecting a memory write operation, the file system can still determine, based on at least a first memory write operation detected in a period of time, that the file is modified. In this way, detection accuracy of the electronic device can be improved.

S109: The application determines that the first file is not a duplicate file.

As mentioned above, at the first moment, the value of the U field of the first file fails to be set to V1. In other words, the first file may be modified (may no longer be a duplicate file) in the time period from the first moment to the second moment, but the file system may fail to detect that the first file is modified. In this case, the application considers the first file as a modified file, and the first file is no longer a duplicate file. In addition, the application does not perform deduplication on the first file, to avoid incorrect deduplication on the first file that is actually a non-duplicate file.

For example, as shown in FIG. 15, it is assumed that the mobile phone has performed a memory write operation on the computer technology 1 in the candidate duplicate files before the moment t1. After initial screening of the duplicate files is completed, at the moment t1, the phone manager application cannot successfully modify a value of a U field of the computer technology 1 to V1 (the value of the U field is still V0). In this case, the phone manager application may no longer perform binary comparison on the computer technology 1. The phone manager application may consider the computer technology 1 as a modified file (no longer a duplicate file), and no longer performs deduplication on the computer technology 1, to avoid incorrect deduplication.

In some embodiments, after determining a modification status of each duplicate file in the time period from t1 to t5, the phone manager application may present, to the user, one or more groups of duplicate files that are not modified. As shown in FIG. 10B, in the time period from t1 to t5, files that are not modified include: the English grammars 1, 3, and 4, and the computer technologies 2 and 3. In other words, the English grammars 1, 3, and 4 still constitute duplicate files, and the computer technologies 2 and 3 still constitute duplicate files.

As shown in FIG. 10A(b), at the moment t2, the mobile phone may display an interface 903. The interface 903 may include a card 905 corresponding to the duplicate files in the mobile phone. As shown in FIG. 10A(b), based on the card 905, the mobile phone stores eight groups of duplicate files (including the group of duplicate files including the English grammars 1, 3, and 4 and the group of duplicate files including the computer technologies 2 and 3), and the duplicate files occupy a total of 229 MB storage space.

In some examples, after detecting that the user taps a "Losslessly compress" button 904, the mobile phone may display an interface 906 shown in FIG. 10A(c). Detailed information about the eight groups of duplicate files may be displayed on the interface 906. For example, as shown in FIG. 10A(c), information about the first group of duplicate files "English grammar 1, English grammar 3, and English grammar 4" is presented on the interface 906. Information about the second group of duplicate files "computer technology 2 and computer technology 3" is further presented on the interface 906. In response to a user operation like a slide-up operation, information about another duplicate file may be further displayed on the interface 906. A plurality of files in each group of duplicate files respectively occupy a plurality of storage spaces. For example, the English grammars 1 to 4 each occupy a 24 MB storage space.

The user may select one or more groups of duplicate files, and tap a "Compress" button 907. The mobile phone may perform, based on a compression/deduplication intention of the user, deduplication on the one or more groups of duplicate files selected by the user. For example, as shown in FIG. 10A(c), if the user selects the group of duplicate files including the English grammars, the mobile phone may perform deduplication on the group of files including the English grammars 1, 3, and 4 based on the compression intention of the user. As shown in FIG. 10C, after the deduplication, the English grammars 1, 3, and 4 occupy only one storage space (24 MB). This greatly releases the storage space of the mobile phone.

In some embodiments, after the deduplication, the electronic device may still display the group of files including the English grammars 1, 3, and 4 on the user interface, and the user may still normally open and use any file in the group of files. Compared with that before the deduplication, the storage space occupied by the English grammars 1, 3, and 4 after the deduplication is reduced.

After the deduplication is completed by using the phone manager application, the user may stop the phone manager application.

Optionally, the foregoing mentioned file deduplication is a possible implementation of file compression. There may be another file compression manner. This is not limited in embodiments of this application.

According to the technical solution in this embodiment of this application, for different types of files, there are different methods for determining whether a file is modified in a period of time, to meet a service requirement of determining whether different types of files are modified.

Specifically, for a file 1 that is not mapped to the memory before the first moment, the electronic device may modify a value of a U field of the file 1 from the initial value V0 to V1 at the first moment. Then, at the second moment, the electronic device may query a value of the U field of the file 1, and determine, based on the value of the U field, whether the file 1 is modified. In some cases, at the second moment, if the value of the U field of the file 1 is a value (for example, V2) other than V1, the electronic device may determine that the file 1 is modified in the time period from the first moment to the second moment. In some other cases, at the second moment, if the value of the U field of the file 1 is V1, the electronic device may determine that the file 1 is not modified in the time period from the first moment to the second moment.

For a file 2 that is mapped to the memory before the first moment, the electronic device does not modify a value of a U field of the file 2 at the first moment (the value of the U field is still the initial value V0). In other words, in the time period from the first moment to the second moment, the file 2 may be modified (may no longer be a duplicate file), but the file system may fail to detect that the file 2 is modified. In this case, the electronic device considers the file 2 as a modified file, and the file 2 is no longer a duplicate file. In addition, the application does not perform deduplication on the file 2, to avoid incorrect deduplication on the file 2 that is actually a non-duplicate file.

It should be noted that V2 may alternatively be replaced with another non-V1 value (for example, V0). In this embodiment of this application, when the file system senses that the file is modified, a specific modified value of the U field is not limited.

The foregoing mainly uses an example in which the application is the phone manager application, to describe the method for determining a modification status of a file. It should be understood that the application may alternatively be any other possible application. For example, the application may alternatively be a file manager or the like. The file manager may determine, by using the technical solution in this embodiment of this application, whether a file in a directory of the file manager is modified in a period of time.

The foregoing mainly uses an example in which the user actively triggers the mobile phone to scan for duplicate files. In some other embodiments, the mobile phone may scan for the duplicate files in the mobile phone, and perform deduplication on some duplicate files, to reduce storage space occupation. For example, the mobile phone actively scans for duplicate files and performs deduplication. For example, at a time point 1, the application modifies values of U fields of files A and B to V1. At a time point 2, the application reads content of the files A and B and considers that the files A and B are duplicate files. At a time point 3, the file A is modified, and the value of the U field of the file A is modified to V2 by the file system. At a time point 4, the application queries values of the U fields of the files A and B, and learns that a value of the U field of the file A is V1, and a value of the U field of the file B is V2. In other words, the file A is modified, the file B is not modified, and the files A and B are no longer duplicate files. Therefore, the application does not perform deduplication on the files A and B.

For another example, at a time point 1, the application modifies values of U fields of files A and B to V1. At a time point 2, the application reads content of the files A and B and considers that the files A and B are duplicate files. At a time point 3, the application queries values of the U fields of the files A and B, and learns that the values of the U fields of the files A and B are V1. In other words, since the time point 1, the files A and B have not been modified, and the files A and B still constitute duplicate files. Therefore, the application may perform deduplication on the files A and B.

### Embodiment 2

An embodiment of this application further provides a file processing method. In the method, that a file has been mapped to a memory may further include the following two cases: The file has been mapped to the memory, but the electronic device does not perform a write on the memory to which the file is mapped; or the file has been mapped to the memory, and the electronic device has performed a write on the memory to which the file is mapped. In the foregoing two cases, the electronic device may determine, in different manners, whether the file is modified. The following provides descriptions with reference to examples.

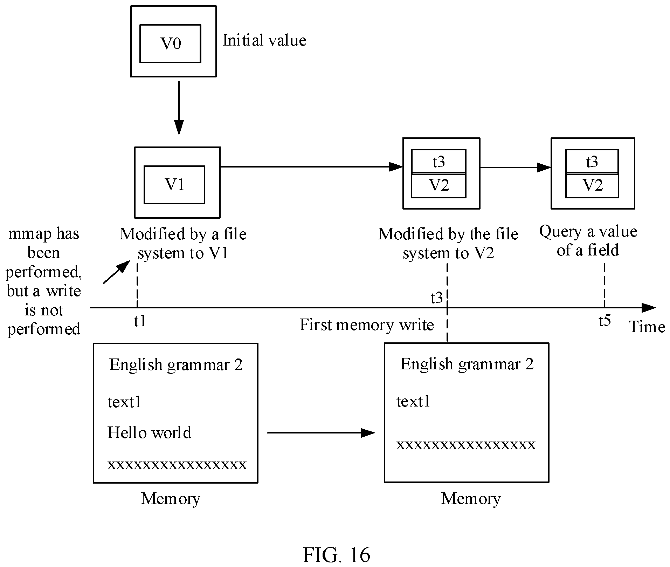

For example, as shown in FIG. 16, after candidate duplicate files are obtained through initial screening, at a moment t1, an application wants to modify a value of a U field of a file, namely, an English grammar 2, to V1. In this case, the application may invoke an interface of a file system to send a request message to the file system. It is determined that the file has been mmaped (that is, has been mapped to the memory) previously, but no content is written into the memory to which the file is mapped. In this case, the file system determines that a condition for modifying the U field of the file is met, and may further modify the value of the U field of the file from an initial value V0 to V1. Then, the application may perform binary comparison on an English grammar 3 and other candidate duplicate files, to determine final duplicate files.

Then, at a moment t3, the electronic device performs, for a first time, a write operation on the memory to which the file is mapped, and the electronic device invokes a function of the file system. Therefore, the file system can sense the write operation on the file. As shown in FIG. 16, after sensing the write operation on the file, the file system may modify the value of the U field of the file from V1 to V2.

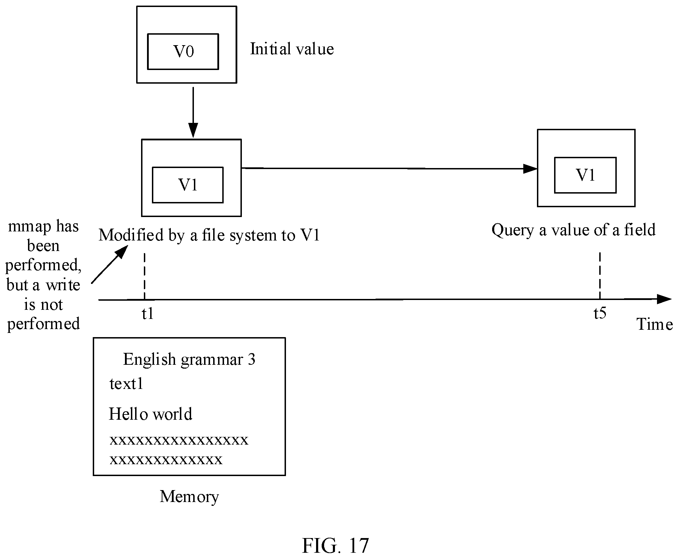

Then, as shown in FIG. 16, after a plurality of duplicate files are obtained through scanning (for example, after binary comparison), and before a scanning result of the duplicate files is displayed to a user, the application queries a value (V2) of the U field of the file at a moment t5. Because the value of the U field obtained through querying at the moment t5 is different from the value of the U field at the moment t1, the application may determine that the file is modified in a time period from t1 to t5. On the contrary, as shown in FIG. 17, the application queries a value (V1) of the U field of the file at a moment t5. Because the value of the U field obtained through querying at the moment t5 is the same as the value of the U field at the moment t1, the application may determine that the file is not modified in a time period from t1 to t5. The mobile phone may display, to the user, duplicate files that are not modified in the time period from t1 to t5. For example, in the time period from t1 to t5, if English grammars 1, 3, and 4 in the duplicate files are not modified, the mobile phone may display information about the English grammars 1, 3, and 4 on an interface shown in FIG. 10A(c).

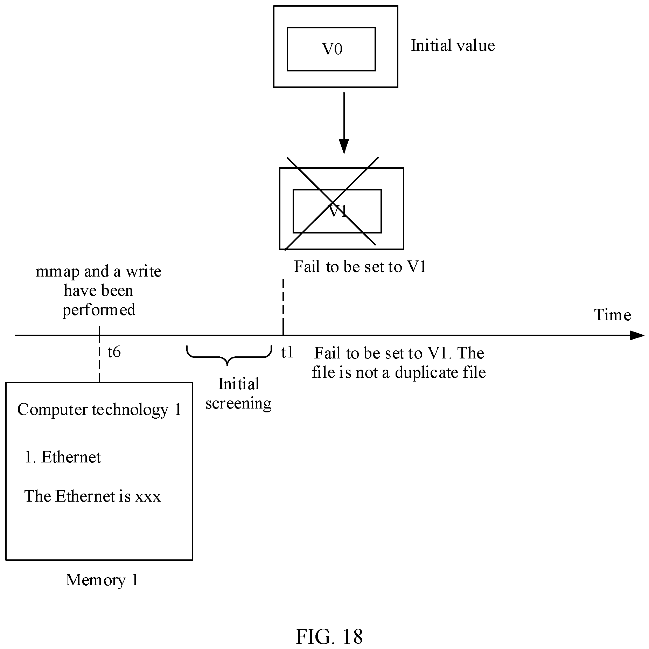

For another example, as shown in FIG. 18, after initial screening of duplicate files is completed, at a moment t1, an application wants to modify a value of a U field of a file, namely, a computer technology 1, to V1. In this case, the application may invoke an interface of a file system to send a request message to the file system. It is determined that the file has been mmaped (that is, has been mapped to the memory) previously, and content has been written into the memory to which the file is mapped. In this case, the file system determines that a condition for modifying the U field of the file is not met. Therefore, the file system does not modify the value of the U field of the file, and the value of the U field of the file is still V0.

When the value of the U field of the file fails to be set to V1 at the moment t1, it indicates that the file may be modified (no longer a duplicate file) in a time period from the moment t1 to a moment at which the scanning result of the reconstructed files is displayed, but the file system may fail to detect that the file is modified. In this case, the application considers the file as a modified file, and the file is no longer a duplicate file. In addition, the application does not perform deduplication on the file, to avoid incorrect deduplication on the file that is actually a non-duplicate file.

In some embodiments, optionally, after the user taps a "Compress" button 907 shown in FIG. 10A(c), and before the mobile phone performs deduplication, a phone manager application sends a deduplication request to the file system, and the file system may check a value of a U field of each duplicate file again, to further determine whether each duplicate file has been modified since a first moment. For example, as shown in FIG. 19, after the user taps the "compress" button, and before the mobile phone performs deduplication, at a moment t9, the file system queries values of U fields of duplicate files (the English grammars 1, 3, and 4, and computer technologies 1 and 2) again. It is determined that a value of a U field of the English grammar 3 is successfully set to V1 at the moment t1, but a value of the U field at the moment t9 is V0. In this case, the mobile phone may determine that the English grammar 3 is modified in a time period from the moment t1 to the moment t9. Similarly, the mobile phone determines whether another duplicate file is modified from the moment t1 to the moment t9.

As shown in FIG. 19, because the English grammar 3 is modified in the time period from t1 to t9, the English grammar 3 and the English grammars 1 and 4 no longer constitute duplicate files, and the phone manager application does not perform deduplication on the English grammar 3. On the contrary, the English grammars 1 and 4 are not modified in the time period from t1 to t9. Therefore, the English grammars 1 and 4 still constitute duplicate files, and the phone manager application may perform deduplication on the English grammars 1 and 4 at a moment t10.

Optionally, after the user taps the "Compress" button 907, the file system checks the value of the U field of the file, to ensure atomicity of checking the value of the U field and the deduplication operation. In other words, in a process of checking the value of the U field, determining that a deduplication condition is met, and performing deduplication, the file is not modified.

According to the technical solution in this embodiment of this application, the application does not need to keep running. In this way, system overheads can be reduced while it is ensured that a modification status of the file is accurately determined. The foregoing deduplication scenario is used as an example. When duplicate files in the mobile phone need to be cleaned, the user starts the phone manager application, and taps a "Clean up" button, to trigger the mobile phone to perform a duplicate file scanning procedure. Then, the user may stop the phone manager application. Subsequently, when a remaining storage space of the mobile phone is insufficient and a phenomenon like frame freezing occurs, the user may start the phone manager application again, and tap the "Clean up" button. The mobile phone may re-determine duplicate files in the mobile phone based on a historical duplicate file scanning result and modification statuses of some duplicate files, to reduce resource consumption caused by re-scanning of the duplicate files.

For example, as shown in FIG. 10A(c), after the user starts the phone manager application, the phone manager application obtains, through scanning, that English grammars 1 to 4 are a group of duplicate files, and the computer technology 1 and the computer technology 2 are a group of duplicate files. The mobile phone may store, in a duplicate file information library shown in FIG. 11, file identifiers of the group of duplicate files including the English grammars 2 to 4 and file identifiers of the group of duplicate files including the computer technology 1 and the computer technology 2.

Subsequently, when the storage space of the mobile phone is insufficient, the user starts the phone manager application again, and taps the "Clean up" button 902. Then, the phone manager application may query the duplicate file information library shown in FIG. 11, learn of the group of historical duplicate files including the English grammars 1 to 4 and a group of historical duplicate files including computer technologies 2 to 4, and query values of U fields of the duplicate files, namely, the English grammars 1 to 4 and the computer technologies 2 to 4, to determine, based on the values of the U fields of the duplicate files, whether the duplicate files are modified in a period of time.

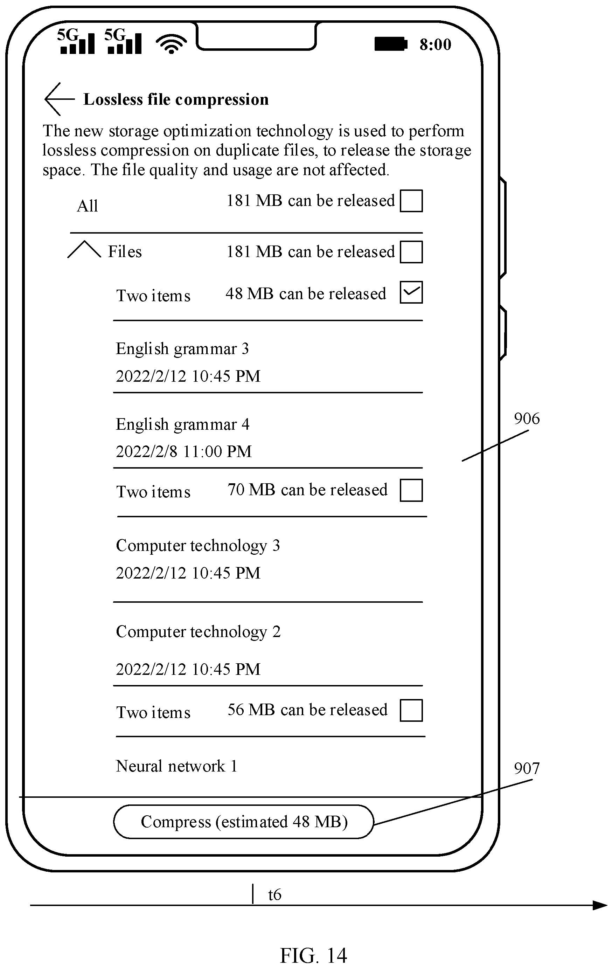

It is assumed that it is determined that the English grammars 1 and 2 are modified, the computer 4 is modified, and the English grammar 3, the English grammar 4, the computer technology 3, and the computer technology 2 are not modified. In this case, the phone manager application may determine that the English grammar 3 and the English grammar 4 still constitute duplicate files, and the computer technology 3 and the computer technology 2 still constitute duplicate files. As shown in FIG. 14, at a moment t6, the phone manager application may display the several groups of duplicate files on an interface 906.

It can be learned that, in a process in which the phone manager application is started again to determine the duplicate files in the mobile phone, the mobile phone may reduce scanning of some files (for example, it is unnecessary to read content of historical duplicate files from a corresponding memory). This greatly reduces running consumption of the mobile phone.

In some embodiments, after re-determining the duplicate files in the mobile phone, the phone manager application may update the duplicate file information library shown in FIG. 11.

The first condition is merely an example. It should be understood that any condition that can ensure that a write operation from the moment t1 to the moment t5 is sensed by the file system may be used as the first condition. On the contrary, as long as it cannot be ensured that a subsequent write is sensed by the file system, the first condition is not met. For example, in another feasible embodiment, it may be determined whether the file is mmaped before the first moment and whether mmap has write permission. If the file is mmaped before the first moment, but mmap does not have the write permission, it is determined that the first condition is met. If the file is mmaped before the first moment, but mmap has the write permission, it is determined that the first condition is not met.

The foregoing mainly uses the deduplication scenario as an example for description. It should be understood that the technical solution in this embodiment of this application may be further applied to another scenario.

The foregoing descriptions are provided by using an example in which the mobile phone scans for the duplicate files after the user taps the "Clean up" button. In some other embodiments, the mobile phone may alternatively perform a pre-scanning procedure, scan for duplicate files in an idle time period, and store a scanning result. In other words, the duplicate file scanning procedure in the foregoing embodiments may alternatively be a scanning procedure performed when the mobile phone is idle (for example, at night). For example, the initial screening and binary comparison processes shown in FIG. 12 may be performed in advance at night.

For example, the mobile phone may scan for duplicate files at night. It is assumed that English grammars 1 to 4 obtained through scanning are a group of duplicate files, and in a scanning process, values of U fields of the English grammars 1 to 4 may be attempted to be modified to V1 at the moment t1. Then, as shown in FIG. 10A(a), the user taps a "Clean up" button 902 in the daytime, and the mobile phone may query values of the U fields of the English grammars 1 to 4. It is assumed that the values of the U fields of the English grammars 1 to 4 are all successfully set to V1 at the moment t1, and values of U fields of the English grammars 1, 3, and 4 are currently still V1. In this case, the mobile phone determines that the English grammars 1, 3, and 4 have not been modified since the moment t1, and the three files still constitute duplicate files. The mobile phone may display information about the three duplicate files on an interface shown in FIG. 10A(c).

Pre-scanning is performed when the mobile phone is idle, so that time required for subsequent file deduplication can be reduced, file deduplication efficiency can be improved, and human-machine interaction efficiency between the user and the electronic device can be improved.

An occasion at which the electronic device performs duplicate file pre-scanning is not limited in embodiments of this application. The electronic device may perform a duplicate file pre-scanning procedure in an appropriate scenario. For example, at night, pre-scanning is performed when screen lock duration exceeds a threshold.

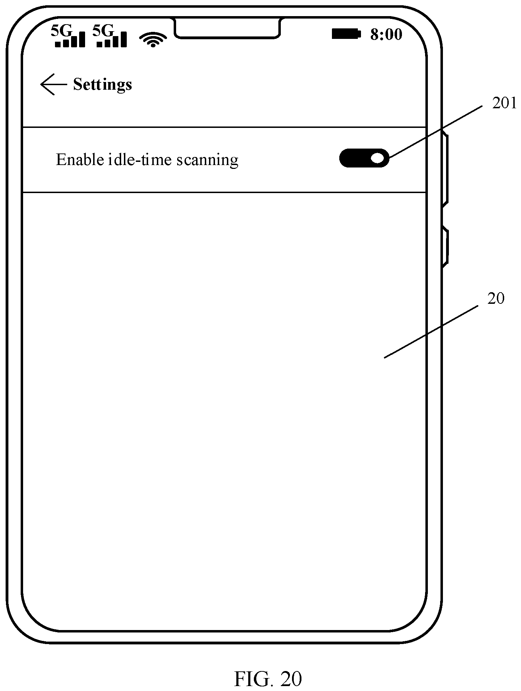

Alternatively, in some embodiments, the electronic device may alternatively provide a setting portal, so that the user may set a pre-scanning occasion. For example, as shown in FIG. 20, a switch 201 is displayed on a setting interface 20 of the mobile phone. When the switch 201 is turned on, the mobile phone may perform pre-scanning when the mobile phone is idle. In some other embodiments, the mobile phone may alternatively provide a setting portal, so that the user may set a pre-scanning occasion. For example, the user may set to perform pre-scanning at night or when screen lock duration exceeds a specific threshold.

The foregoing one or more interfaces are all examples, and there may be another interface design manner. A specific interface design manner is not limited in this application.

It should be noted that the foregoing plurality of embodiments may be combined, and a combined solution is implemented. Optionally, some operations in the procedures of the method embodiments are optionally combined, and/or a sequence of some operations is optionally changed. In addition, an execution sequence of steps of each procedure is merely an example, and does not constitute a limitation on an execution sequence of the steps. The steps may be alternatively performed in another execution sequence. It is not intended to indicate that the execution sequence is the only sequence in which these operations can be performed. A person of ordinary skill in the art may learn a plurality of manners of re-ranking the operations described in this specification. In addition, it should be noted that process details related to an embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

Optionally, the electronic device may alternatively determine, on another occasion or in another scenario, whether V1 is successfully set. For example, before each query of the field value of the file, it is determined whether V1 is successfully set.

Some other embodiments of this application provide an apparatus. The apparatus may be the foregoing electronic device (for example, a mobile phone) or server. The apparatus may include a display, a memory, and one or more processors. The display and the memory are coupled to the processor. The memory is configured to store computer program code, and the computer program code includes computer instructions. When the processor executes the computer instructions, the apparatus may perform the functions or the steps performed by the mobile phone in the foregoing method embodiments. For a structure of the apparatus, refer to the electronic device (for example, a terminal) shown in FIG. 6.

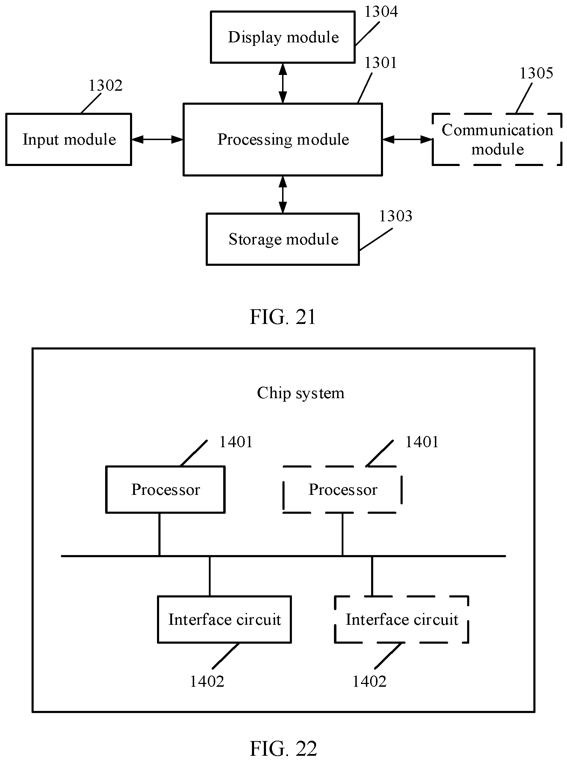

A core structure of the apparatus may be represented as a structure shown in FIG. 21. The apparatus includes a processing module 1301, an input module 1302, a storage module 1303, and a display module 1304.

The processing module 1301 may include at least one of a central processing unit (CPU), an application processor (Application Processor, AP), or a communication processor (Communication Processor, CP). The processing module 1301 may perform an operation or data processing related to control and/or communication of at least one of other elements of the user electronic device. Specifically, the processing module 1301 may be configured to control, based on a specific trigger condition, content displayed on a primary screen. The processing module 1301 is further configured to process input instructions or data, and determine a display style based on processed data.

Optionally, the processing module 1301 may be implemented as the processor 201 shown in FIG. 6.

The input module 1302 is configured to obtain an instruction or data entered by a user, and transmit the obtained instructions or data to another module of the electronic device. Specifically, an input manner of the input module 1302 may include a touch, a gesture, proximity to a screen, or the like, or may be a voice input. For example, the input module may be a screen of the electronic device, and may obtain an input operation of the user, generate an input signal based on the obtained input operation, and transmit the input signal to the processing module 1301.

The storage module 1303 may include a volatile memory and/or a non-volatile memory. The storage module is configured to store instructions or data related to at least one of other modules of a user terminal device.

Optionally, the storage module 1303 may be implemented as the memory 202 shown in FIG. 6.

The display module 1304 may include, for example, a liquid crystal display (LCD), a light-emitting diode (LED) display, an organic light-emitting diode (OLED) display, a micro-electro-mechanical system (MEMS) display, or an electronic paper display. The display module is configured to display content (for example, a text, an image, a video, an icon, or a symbol) that can be viewed by the user.

Optionally, a communication module 1305 is further included, and is configured to support a personal terminal in communicating with another personal terminal (through a communication network). For example, the communication module may be connected to a network through wireless communication or wired communication, to communicate with another personal terminal or a network server. The wireless communication may use at least one of cellular communication protocols, such as long term evolution (LTE), long term evolution advanced (LTE-A), code division multiple access (CDMA), wideband code division multiple access (WCDMA), universal mobile telecommunications system (UMTS), wireless broadband (WiBro), or a global system for mobile communications (GSM). The wireless communication may include, for example, short-range communication. The short-range communication may include at least one of wireless fidelity (Wi-Fi), Bluetooth, near field communication (NFC), magnetic stripe transmission (MST), or GNSS.

Optionally, the communication module 1305 may be implemented as the transceiver 203 shown in FIG. 6.

It should be noted that each functional module of the apparatus may perform one or more steps in the method embodiments.

An embodiment of this application further provides a chip system. As shown in FIG. 22, the chip system includes at least one processor 1401 and at least one interface circuit 1402. The processor 1401 and the interface circuit 1402 may be connected to each other through a line. For example, the interface circuit 1402 may be configured to receive a signal from another apparatus (for example, a memory of an electronic device). For another example, the interface circuit 1402 may be configured to send a signal to another apparatus (for example, the processor 1401). For example, the interface circuit 1402 may read instructions stored in the memory, and send the instructions to the processor 1401. When the instructions are executed by the processor 1401, the electronic device is enabled to perform the steps in the foregoing embodiments. Certainly, the chip system may further include another discrete component. This is not specifically limited in embodiments of this application.

An embodiment of this application further provides a computer storage medium. The computer storage medium includes computer instructions. When the computer instructions are run on the electronic device, the electronic device is enabled to perform the functions or the steps performed by the mobile phone in the method embodiments.

An embodiment of this application further provides a computer program product. When the computer program product runs on a computer, the computer is enabled to perform the functions or the steps performed by the mobile phone in the method embodiments.

The foregoing descriptions about implementations allow a person skilled in the art to clearly understand that, for the purpose of convenient and brief description, division of the functional modules is used as an example for illustration. In actual application, the functions can be allocated to different modules and implemented based on a requirement, that is, an inner structure of an apparatus is divided into different functional modules to implement all or some of the functions described above.

In the several embodiments provided in this application, it should be understood that the disclosed apparatuses and methods may be implemented in another manner. For example, the described apparatus embodiment is merely an example. For example, the module or unit division is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate components may or may not be physically separate, and components displayed as units may be one or more physical units, may be located in one place, or may be distributed on a plurality of different places. Some or all of the units may be selected based on an actual requirement to achieve an objective of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A file processing method, applied to an electronic device, wherein the electronic device stores an indication field of a first file, an initial value of the indication field is a first value, and the indication field is modified to a second value by the electronic device when the first file is modified; and the method comprises:
attempting to modify a value of the indication field of the first file to a third value at a first moment, wherein the third value is different from the first value, and the third value is different from the second value;
if the value of the indication field of the first file is successfully modified to the third value, obtaining a value of the indication field at a second moment; and
determining, based on the value of the indication field of the first file at the second moment, whether the first file is modified in a time period from the first moment to the second moment.

2. The method according to claim 1, wherein the indication field is stored in a metadata area of the electronic device.

3. The method according to claim 1 or 2, wherein the attempting to modify a value of the indication field of the first file to a third value comprises:
if a first condition is met, modifying the value of the indication field to the third value, wherein in the first condition, a file system of the electronic device is able to detect a modification operation that is performed on the first file in the time period from the first moment to the second moment.

4. The method according to any one of claims 1 to 3, wherein after the first moment, the method further comprises:
detecting that the first file is modified, and modifying the value of the indication field of the first file to the second value; and
the determining, based on the value of the indication field of the first file at the second moment, whether the first file is modified in a time period from the first moment to the second moment comprises:
if the value of the indication field of the first file at the second moment is the second value, determining that the first file is modified in the time period from the first moment to the second moment, or if the value of the indication field of the first file at the second moment is not the third value, determining that the first file is modified in the time period from the first moment to the second moment.

5. The method according to any one of claims 1 to 3, wherein the determining, based on the value of the indication field of the first file at the second moment, whether the first file is modified in a time period from the first moment to the second moment comprises:
if the value of the indication field of the first file at the second moment is the third value, determining that the first file is not modified in the time period from the first moment to the second moment, or if the value of the indication field of the first file at the second moment is not the second value, determining that the first file is not modified in the time period from the first moment to the second moment.

6. The method according to claim 1 or 2, wherein the attempting to modify a value of the indication field of the first file to a third value comprises: if a first condition is not met, skipping modifying the indication field to the third value; and
the method further comprises: when the value of the indication field of the first file fails to be modified to the third value, determining that the first file is modified in the time period from the first moment to the second moment.

7. The method according to claim 3 or 6, wherein the first condition comprises one or more of the following conditions: the first file is not mapped to a memory before the first moment; or the first file is mapped to a memory before the first moment, but the electronic device does not perform a write operation on the memory.

8. The method according to any one of claims 1 to 7, wherein the method further comprises:
obtaining duplicate files in the electronic device through scanning, wherein the duplicate files comprise the first file and a second file, the first file is stored in a first storage space, and the second file is stored in a second storage space;
determining that the first file and the second file are not modified in the time period from the first moment to the second moment; and
displaying a first interface, wherein the first interface comprises information about the first file and information about the second file.

9. The method according to claim 8, wherein a first operation entered by a user on the first interface is detected, and the method further comprises:
compressing the first file and the second file to a same storage space.

10. The method according to claim 8 or 9, wherein after the scanning for duplicate files in the electronic device, the method further comprises:
storing an identifier of the first file and an identifier of the second file.

11. The method according to claim 10, wherein the identifier of the first file comprises a first index node number of the first file, and the identifier of the second file comprises a second index node number of the second file.

12. The method according to claim 11, wherein the determining, based on the value of the indication field of the first file at the second moment, whether the first file is modified in a time period from the first moment to the second moment comprises:
if the value of the indication field of the first file at the second moment is the third value, and an index node number of the first file is the first index node number, determining that the first file is not modified in the time period from the first moment to the second moment.

13. A file processing method, applied to an electronic device, wherein the method comprises:
displaying a second interface, wherein the second interface comprises a plurality of duplicate files that are in the electronic device and that are obtained through scanning, and the plurality of duplicate files are respectively stored in a plurality of storage spaces of the electronic device;
in response to an operation entered by a user on the second interface, obtaining an indication field of each of the plurality of duplicate files at a third moment, wherein a value of the indication field of the duplicate file indicates whether the duplicate file is modified; and
compressing a part of the plurality of duplicate files to a same storage space based on the values of the indication fields of the plurality of duplicate files at the third moment.

14. The method according to claim 13, wherein the compressing a part of the plurality of duplicate files to a same storage space based on the values of the indication fields of the plurality of duplicate files at the third moment comprises:
if a value of an indication field of a first file in the plurality of duplicate files at the third moment is a third value, compressing the first file; or
if a value of an indication field of a first file in the plurality of duplicate files at the third moment is not a third value, skipping compressing the first file.

15. The method according to claim 13 or 14, wherein an initial value of the indication field of each duplicate file is a first value.

16. The method according to any one of claims 13 to 15, wherein before the displaying a second interface, the method further comprises:
obtaining a plurality of candidate duplicate files through scanning, wherein the plurality of candidate duplicate files comprise the plurality of duplicate files;
attempting to modify a value of an indication field of each of the plurality of candidate duplicate files to the third value at a first moment; and
comparing the plurality of candidate duplicate files to determine the plurality of duplicate files from the plurality of candidate duplicate files.

17. The method according to claim 16, wherein after the plurality of duplicate files are determined, the method further comprises:
storing information about the plurality of duplicate files in a database, wherein the information about the duplicate files comprises any one or more of the following information: index node numbers of the duplicate files, paths of the duplicate files, and names of the duplicate files.

18. The method according to claim 16 or 17, wherein the obtaining a plurality of candidate duplicate files through scanning comprises:
displaying a third interface, wherein the third interface comprises a first control; and
detecting an operation of the user on the first control, and obtaining the plurality of candidate duplicate files through scanning.

19. The method according to claim 16 or 17, wherein the obtaining a plurality of candidate duplicate files through scanning comprises:
when the electronic device is idle, obtaining the plurality of candidate duplicate files through scanning.

20. The method according to any one of claims 16 to 19, wherein the attempting to modify a value of an indication field of each of the plurality of candidate duplicate files to the third value comprises:
if at least one of the plurality of candidate duplicate files meets a first condition, modifying a value of an indication field of the at least one candidate duplicate file to the third value, wherein in the first condition, a file system of the electronic device is able to detect a modification operation that is performed on the at least one candidate duplicate file in a time period from the first moment to the second moment.

21. The method according to claim 20, wherein obtaining a value of the indication field of the at least one duplicate file at the second moment comprises: at the second moment, learning that a value of an indication field of a target duplicate file in the at least one duplicate file is the third value; and
the method further comprises: determining that the target duplicate file is not modified in the time period from the first moment to the second moment when the value of the indication field of the target duplicate file at the second moment is the third value.

22. The method according to claim 20, wherein the plurality of candidate duplicate files comprise a third file; and
after the first moment, the method further comprises: detecting that the third file is modified, and modifying a value of an indication field of the third file to a second value;
at the second moment, learning that a value of the indication field of the third file is not the third value; and
determining that the third file is modified in the time period from the first moment to the second moment.

23. The method according to any one of claims 16 to 19, wherein the plurality of candidate duplicate files comprise a fourth file;
the attempting to modify a value of an indication field of each of the plurality of candidate duplicate files to the third value at a first moment comprises: if the fourth file does not meet a first condition, skipping modifying an indication field of the fourth file to the third value; and
the method further comprises: when a value of the indication field of the fourth file fails to be modified to the third value, determining that the fourth file is modified in a time period from the first moment to a second moment.

24. The method according to any one of claims 20 to 23, wherein the first condition comprises one or more of the following conditions: the duplicate file is not mapped to a memory before the first moment; or the duplicate file is mapped to a memory before the first moment, but the electronic device does not perform a write operation on the memory.

25. The method according to any one of claims 16 to 24, wherein after the first moment, the method further comprises:
obtaining the value of the indication field of the at least one duplicate file and an index node number of the at least one duplicate file at the second moment; and
displaying the second interface when a third condition is met, wherein the third condition comprises: the value of the indication field of the at least one duplicate file at the second moment is the third value, and the index node number of the at least one duplicate file is consistent with an index node number stored in the database.

26. The method according to any one of claims 13 to 25, wherein the indication field is stored in a metadata area of the electronic device.

27. An electronic device, comprising a processor and a memory, wherein
the memory is configured to store computer-executable instructions, the processor is coupled to the memory, and when the electronic device runs, the processor executes the computer-executable instructions stored in the memory, to enable the electronic device to perform the method according to any one of claims 1 to 12, or perform the method according to any one of claims 13 to 26.

28. A computer-readable storage medium, wherein the computer-readable storage medium stores instructions, and when the instructions are run on an electronic device, the electronic device is enabled to perform the method according to any one of claims 1 to 12, or perform the method according to any one of claims 13 to 26.
